# EUROPÄISCHE PATENTANMELDUNG

(11) **EP 4 620 307 A1**
(43) Veröffentlichungstag der Anmeldung: **24.09.2025**
(21) Anmeldenummer: 24164289.1
(22) Anmeldetag: 18.03.2024
(51) Int. Cl.: A23G 3/02, A23G 3/34, A23G 3/04

(54) **MILCHCRUMB-HERSTELLUNGSEINRICHTUNG UND VERFAHREN ZUR HERSTELLUNG VON MILCHCRUMB**

(71) Anmelder: CHOCOTECH GmbH, 38855 Wernigerode (DE)
(72) Erfinder: BERGER, Heiko, 31275 Lehrte (DE); FLEISCH, Jens, 38855 Wernigerode (DE); HUCH, Theobald, 38302 Wolfenbüttel (DE)
(74) Vertreter: REHBERG HÜPPE + PARTNER

(57) **Zusammenfassung**

Die Erfindung betrifft eine Milchcrumb-Herstellungseinrichtung (14) mit einem Kocher (2) und einem Kristallisator (5) sowie ggf. einem Trockner (6).

Erfindungsgemäß ist der Kocher (2) oberhalb des Kristallisators (5) angeordnet. Der Kocher (2) und der Kristallisator (5) sind unmittelbar über eine Übertrittsöffnung (4), also ohne zwischengeschaltetes Masseleitungsrohr, miteinander verbunden. Die in dem Kocher (2) gekochte SCM (1) wird zumindest teilweise durch die Schwerkraft von dem Kocher (2) durch die Übertrittsöffnung (4) zu dem Kristallisator (5) gefördert. Hierbei kann die Übertrittsöffnung (4) eine Fläche von mindestens 8.000 mm² aufweisen. Ein freier Übertrittsquerschnitt in dem Kocher (2) ist nicht mit der SCM (1) gefüllt, so dass hier ein Unterdruck wirken kann, der unmittelbar auf den Kocher (2) aufgebracht wird oder von dem Kristallisator (5) über die Übertrittsöffnung (4) zum Kocher (2) übertragen wird. Erfindungsgemäß wird ein Kochen mit verringerter Temperatur und damit geringerer Karamellisierung ermöglicht.

## Beschreibung

### TECHNISCHES GEBIET DER ERFINDUNG

Die Erfindung betrifft eine Milchcrumb-Herstellungseinrichtung, mittels welcher sogenannter Milchcrumb hergestellt werden kann. Milchcrumb wird aus gesüßter kondensierter Milch (sweetened condensed milk, abgekürzt im Folgenden "SCM") hergestellt, wobei der SCM Kakaolikör zugeführt werden kann. Der in der Regel krümelige oder pulverförmige Milchcrumb dient als Ausgangsprodukt für die Herstellung von Milchschokolade, wobei der Milchcrumb beispielsweise zu 85 % aus SCM bestehen kann. Der Milchcrumb zeichnet sich insbesondere durch eine gute und verlängerte Lagerfähigkeit und gute Verarbeitbarkeit aus. Im Folgenden wird unter einem Milchcrumb auch ein Schokoladecrumb subsumiert, in dem ein Anteil an Kakaolikör verarbeitet ist und/oder der zur Herstellung von Milchschokolade dient.

Die Erfindung betrifft auch ein Verfahren zur Herstellung von Milchcrumb.

### STAND DER TECHNIK

WO 2010/089533 A1 offenbart ein Verfahren zur Herstellung von Milchcrumb, der für die Herstellung von Milchschokolade bestimmt ist. Ein niedriger Wassergehalt und ein Vorhandensein von Zucker und Kakao, der Antioxidantien beinhaltet, gewährleisten, dass der Milchcrumb eine größere Lagerfähigkeit hat als die darin enthaltene Milch. Wesentliche Qualitätskriterien für den Milchcrumb sind dessen Konsistenz und Geschmack. Diese Qualitätskriterien und insbesondere der gewünschte Karamellgeschmack sind von der Maillard-Reaktion zwischen Proteinen, die in der Milch und dem Kakao vorhanden sind, Wasser und reduziertem Zucker (aus in der Milch enthaltener Laktose) abhängig. Ein kritischer Zustand bei der Herstellung des Milchcrumbs ist die Phasenveränderung, bei der die teigartige Mischung in ein Pulver umgewandelt wird unter einer Kristallisation von Sucrose oder Zucker, was eine sehr exakte Steuerung der Prozessbedingungen erfordert. WO 2010/089533 A1 schlägt vor, dass bei einer Herstellung des Milchcrumbs folgende Verfahrensschritte ausgeführt werden:
- Herstellung eines Gemisches aus Milch und Zucker;
- Verdampfung von Flüssigkeit aus dem Gemisch;
- Hinzufügung einer Kakaomasse oder -likörs zu dem Gemisch;
- Herbeiführung einer Kristallisation von Zucker in dem Gemisch bei einer Temperatur im Bereich von 55 °C bis 100 °C und bei einem abgesenkten Druck im Bereich von 35 mbar bis 180 mbar für 10 bis 20 Minuten;
- Trocknen des Gemisches zur Bildung des Milchcrumb.

Nach der Kristallisation des Zuckers kann der Gesamtanteil der Feststoffe im Bereich von 90 % TS bis 96 % TS liegen, womit die Feuchtigkeit des Gemisches dann im Bereich von 4 % bis 10 % liegt. Möglich ist, dass vor der Herbeiführung der Kristallisation des Zuckers in dem angegebenen Temperaturbereich eine temporäre Temperaturerhöhung auf eine höhere Temperatur erfolgt, wobei dann für bis zu 10 Minuten ein Druck im Bereich von 200 bis 800 mbar wirken kann. Vor der Kristallisation des Zuckers kann der gesamte Feststoffanteil im Bereich von 88% TS bis 95 %TS liegen, also eine Feuchtigkeit im Bereich von 5 bis 12%. In dem Verfahren kann Milchpulver, flüssige Milch oder ein Gemisch hiervon eingesetzt werden. Bei der Herstellung des Ausgangsgemisches kann Wasser zugesetzt werden. Einzelne oder sämtliche genannten Verfahrensschritte können in einem einzigen Reaktionsbehälter satzweise ausgeführt werden. Vor dem Trocknen des Gemisches zur Bildung des Milchcrumbs kann dem Gemisch Fett (insbesondere Kakaobutter, Milchfett, CBE, CBS oder Pflanzenfett) zugesetzt werden. Ein in WO 2010/089533 A1 vorgeschlagener Reaktionsbehälter verfügt über ein zylindrisches Gehäuse, in dem eine mittels eines Motors verdrehte Welle mit Flügeln angeordnet ist. In den Innenraum des Gehäuses führt ein Pulvereinlass. Des Weiteren verfügt das Gehäuse über ein Auslassventil. Schließlich steht der Innenraum des Gehäuses in Verbindung mit einem Kondensationsturm. Der Reaktionsbehälter weist eine als Wärmetauscher wirkende Temperierhülle auf. Dem Reaktionsbehälter kann über das Einlassventil und den Pulvereinlass (gleichzeitig oder zeitlich versetzt) Milch, Zucker, Schokolademasse und/oder Flüssigkeit zugeführt werden. Eine Durchmischung wird durch Verdrehung der Welle mit den Flügeln herbeigeführt, wobei eine Temperatursteuerung über die Temperierhülle erfolgt. Sich bildender Dampf kann über den Auslass des Kondensationsturmes abgeführt und einer Nachbehandlungseinrichtung zugeführt werden. Nach einer Kristallisierung des Zuckers kann der Milchcrumb getrocknet und für die weitere Verarbeitung über das Auslassventil abgeführt werden. In einem konkreten, beispielhaft beschriebenen Verfahren gemäß WO 2010/089533 A1 erfolgt zunächst eine Herstellung von SCM. Die SCM wird dann für 10 bis 60 Minuten auf 85 °C erwärmt. Dann wird Kakaomasse oder Kakaolikör zugesetzt, wobei eine Temperatur zwischen 80 °C und 110 °C aufrechterhalten wird. In einem Vakuum wird dann eine Kristallisation initiiert. Hierzu muss das Gemisch hinreichend Energie beinhalten, damit bei Applikation des Vakuums eine Verdampfung von Wasser ausgelöst wird, um die Kristallisation zu initiieren. Eine Vervollständigung der Kristallisation erfolgt dann bei einer Temperatur von ungefähr 100 °C und einem Druck von ca. 150 mbar, der für 10 bis 20 Minuten wirken soll. Eine Trocknung erfolgt bei ca. 70 °C bis 80 °C für ungefähr 25 Minuten mit einer Herbeiführung einer Verdampfung infolge eines niedrigen Drucks. Es erfolgt schließlich eine Abkühlung bei ca. 30 °C für 120 Minuten.

WO 97/24035 A1 schlägt ein Verfahren zur Herstellung von Milchcrumb vor, welcher am Ende des Verfahrens getrocknete Milch-Feststoffe mit 23 bis 34 Gewichtsprozent, Zucker mit 50 bis 55 Gewichtsprozent, Kakaobutter mit 8 bis 12 Gewichtsprozent, Kakaoflüssigkeit mit 4 bis 8 Gewichtsprozent, Butterfett mit 0 bis 10 Gewichtsprozent und Feuchtigkeit mit weniger als 1 Gewichtsprozent aufweisen soll, wobei die Gesamtmenge getrockneter Milch-Feststoffe und des Butterfetts im Bereich von 30 bis 34 Gewichtsprozent liegen soll. Ein erster Teil flüssiger Milch mit Milch-Festkörpern einschließlich Butterfett und Wasser in einer Menge, die ausreicht, um den ersten Teil des Zuckers zu hydrieren, wird mit einem ersten Teil Zucker gemischt, womit eine Slurry gebildet wird. Anschließen wird die Slurry einer Temperatur von 105 °C bis 115 °C ausgesetzt für eine Zeitspanne, die ausreicht, um den Zucker in einem gewünschten Ausmaß zu karamellisieren und das Wasser zu entfernen. Die derart karamellisierte Slurry wird dann für eine bestimmte Zeitspanne einer erhöhten Temperatur ausgesetzt. Ein zweiter Teil der flüssigen Milch wird dann mit der erwärmten karamellisierten Slurry gemischt, um ein Re-Hydrieren des karamellisierten Zuckers herbeizuführen. Die sich ergebende Mischung wird dann einem konventionellen Trockner zugeführt. Es erfolgt dann eine Mischung mit einem zweiten Teil des Zuckers, der Kakaobutter und dem Kakaolikör sowie dem Butterfett.

AU 199918487 B2 offenbart eine Herstellung eines Milchcrumbs, bei welchem das Verhältnis der Milch-Feststoffe zu Zucker im Bereich von 1:1,5 und 1:0,1 liegt. Dies erfolgt durch Mischen und Erwärmen von Milch-Feststoffen und Zucker in dem genannten Verhältnis, ohne dass Kakao-Feststoffe vorhanden sind, und 1,2 bis 8 Gewichtsprozent Wasser in einem Mischer auf eine Temperatur im Bereich von 85 °C bis 120 °C. Für eine Zeitspanne von 2,5 bis 25 Minuten erfolgt eine Reaktion des Gemisches bei einer Temperatur im Bereich von 85 °C bis 180 °C mit anschließender Trocknung des Gemisches derart, dass die Feuchtigkeit weniger als 3 Gewichtsprozent beträgt.

### AUFGABE DER ERFINDUNG

Der Erfindung liegt die Aufgabe zugrunde, eine Milchcrumb-Herstelleinrichtung vorzuschlagen, die insbesondere hinsichtlich
- der Prozessbedingungen und/oder
- der physikalischen und/oder geschmacklichen Eigenschaften des hergestellten Milchcrumbs und/oder
- der Prozesszuverlässigkeit und/oder
- des Wartungsaufwandes
verbessert ist. Des Weiteren liegt der Erfindung die Aufgabe zugrunde, ein entsprechend verbessertes Verfahren zur Herstellung von Milchcrumb vorzuschlagen.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Die Erfindung schlägt eine Milchcrumb-Herstellungseinrichtung vor, die einen Kocher beliebigen Bautyps aufweist. Der Kocher dient dabei einer Erwärmung des Produktes und/oder zum Verdampfen von Wasser. Infolge der Ausdampfung des Wassers steigt die Feststoffkonzentration (insbesondere die Sucrosekonzentration) in der Produktmasse. Durch diesen Konzentrationsanstieg kann dann in dem im Folgenden beschriebenen Prozess die Auskristallisation von Sucrose erfolgen. Der Kocher verfügt über einen SCM-Masse-Anschluss, dem SCM zugeführt wird, beispielsweise aus einem Herstellprozess für SCM oder einem Vorratsbehälter. Dem SCM-Masse-Anschluss kann dabei SCM oder eine Masse mit bereits mit Kakaolikör angereicherter SCM (gegebenenfalls mit weiteren zusätzlichen Komponenten) zugeführt werden. Des Weiteren verfügt der Kocher über eine Heizeinrichtung zum Erwärmen und Kochen der Masse in dem Kocher, wobei vorzugsweise die Heizeinrichtung als Wärmetauscher ausgebildet ist mit einem in eine Gehäusewandung des Kochers integrierten Heizkreislauf. Der Kocher weist auch einen Rotor auf. Beispielsweise kann es sich bei dem Kocher um einen kontinuierlichen Dünnfilmkocher handeln.

Die erfindungsgemäße Milchcrumb-Herstellungseinrichtung verfügt über einen Kristallisator. In dem Kristallisator erfolgt
- ein Fördern der in dem Kocher gekochten Masse,
- ein Ausdampfen der Masse durch Entzug von Feuchtigkeit,
- eine Scherung, Umwälzung und/oder Zerkleinerung der Masse, um den Verdunstungsprozess für das Wasser zu unterstützen,
- eine Einleitung und Herbeiführung einer Kristallisation.

Die Erfindung beruht insbesondere auf der Erkenntnis, dass in herkömmlichen Milchcrumb-Herstellungseinrichtungen an den Kocher ein separater Ausdampfraum, in dem der Wasserdampf vom Produkt getrennt wird, anschließt. Eine Pumpe am Ausgang des Ausdampfraumes pumpt bei herkömmlichen Milchcrumb-Herstellungseinrichtungen die Masse zum Kristallisator. Die Verbindung der genannten Komponenten erfolgt für herkömmliche Milchcrumb-Herstellungseinrichtungen über ein Masseleitungsrohr. Der begrenzte lichte Querschnitt des Masseleitungsrohres bildet bei der Überführung der Masse eine Engstelle. Die der Erfindung zugrunde liegenden Überlegungen und Untersuchungen haben zu dem Ergebnis geführt, dass diese Engstelle nachteilig ist. Die Engstelle bedingt die Gestaltung der Prozessbedingungen derart, dass für die Gewährleistung eines gewünschten Massestroms ein Druckgefälle von dem Kocher zu dem Kristallisator oder Ausdampfraum vorhanden sein muss oder in das Masseleitungsrohr eine Pumpe integriert werden muss. Des Weiteren kann es im Bereich des Masseleitungsrohres und der Engstelle zu einer unerwünschten Kristallisation der Masse kommen, womit die Engstelle zunehmend weiter verengt werden kann, was schlimmstenfalls den Abbruch des Herstellprozesses für eine Reinigung zur Folge hat. Ein Druckverlust im Bereich der Engstelle kann auch zu einem höheren Druck und einer höheren Temperatur der Masse in dem Kocher führen, was zu einer Überhitzung der Masse und beispielsweise einem unerwünscht starken Ausmaß eines Karamellisierens der Masse führen kann.

Vor dem Hintergrund dieser Erkenntnisse schlägt die Erfindung vor, dass der Kocher oberhalb des Kristallisators angeordnet ist. In diesem Fall können erfindungsgemäß nicht der Ausdampfraum und der Kristallisator als zwei separate Komponenten vorhanden sein, sondern der Kristallisator bildet multifunktional als eine einzige Komponente auch den Ausdampfraum.

Der Kristallisator mit dem integrierten Ausdampfraum unterhalb des Kochers bietet sowohl die Möglichkeit, den Dampf vom Produkt zu trennen, als auch die Kristallisation einzuleiten und herbeizuführen als auch durch seine Ausstattung mit Mischerwellen und rührenden Elementen die Kristallisation durchzuführen.

Durch den Wegfall der Verbindungsleitung wird die Gefahr des Zuwachsens zumindest reduziert, womit wiederum der Prozess des Kochens auch mit höherer End-Übersättigung durchgeführt werden kann. Hierbei kann der Kocher beispielsweise unmittelbar an den Kristallisator angeflanscht sein oder über einem Verbindungsstutzen mit dem Kristallisator verbunden sein. Der Kocher und der Kristallisator sind somit erfindungsgemäß nicht als separate und beabstandet voneinander angeordnete sowie über ein Masseleitungsrohr miteinander verbundene Einheiten ausgebildet. Vielmehr stehen erfindungsgemäß der Kocher und der Kristallisator über eine Übertrittsöffnung miteinander in Verbindung. Hierbei kann die Übertrittsöffnung unmittelbar von dem Gehäuse des Kochers und/oder des Kristallisators im Flanschbereich oder im Bereich von Gehäuseöffnungen des Kristallisators und des Kochers oder von dem Verbindungsstutzen ausgebildet sein.

Dadurch, dass der Kocher oberhalb des Kristallisators angeordnet ist, wird die in dem Kocher gekochte Masse erfindungsgemäß zumindest teilweise durch die Schwerkraft von dem Kocher durch die Übertrittsöffnung zu dem Kristallisator gefördert. Neben der Schwerkraft kann die Förderung der Masse durch die Übertrittsöffnung auch dadurch erfolgen, dass die Masse mittels des Rotors, insbesondere einem angestellten Schieber oder Wischer des Rotors, in Richtung der Übertrittsöffnung bewegt wird. Alternativ oder kumulativ möglich ist, dass eine Strömung eine Nebenstromkreislaufes die Bewegung der Masse durch die Übertrittsöffnung unterstützt. Alternativ oder kumulativ kann mit einem Nebenstrom auch die Trocknungswirkung erhöht werden. Durch den Einsatz der Übertrittsöffnung zwischen dem Kocher und dem Kristallisator ist die zuvor erläuterte Engstelle eines Masseleitungsrohres vermieden, was die Gefahr von Druckverlusten und Verstopfungen zwischen Kocher und Kristallisator zumindest reduziert.

Die Erfindung umfasst Ausführungsformen, bei welchen die Rotationsachse des Rotors des Kochers und/oder Längs- oder Förderachse des Kochers gegenüber der Vertikalen um einen Winkel von weniger als 60°, weniger als 45°, weniger als 30° oder weniger als 20° geneigt ist. Vorzugsweise ist die Rotationsachse des Rotors des Kochers und/oder die Längs- oder Förderachse des Kochers in Richtung der Vertikalen orientiert. Je nach Ausrichtung der Rotationsachse, Längsachse und Förderachse wirkt dann eine kleinere oder größere Komponente der Schwerkraft auf die Masse, um die Bewegung derselben durch die Übertrittsöffnung von dem Kocher zu dem Kristallisator zu unterstützen.

Für einen Vorschlag der Erfindung verfügt die Milchcrumb-Herstellungseinrichtung über eine Steuereinrichtung, die als zentrale Steuereinheit ausgebildet sein kann oder über mehrere, miteinander verbundene oder vernetzte Steuereinheiten verfügen kann, die beispielsweise einerseits dem Kocher und andererseits dem Kristallisator zugeordnet sein können.

Die Steuereinrichtung ist dabei mit Steuerlogik derart gestaltet und konfiguriert, dass die in dem Kocher gekochte Masse mit einem Volumenstrom derart durch die Übertrittsöffnung zu dem Kristallisator gefördert wird, dass ein freier, nicht mit der Masse gefüllter Übertrittsquerschnitt verbleibt. Dieser freie Übertrittsquerschnitt kann beispielsweise den Hindurchtritt der Masse durch die Übertrittsöffnung vereinfachen, da im Bereich des freien Übertrittsquerschnitt keine Adhäsion der Masse an einer Wandung einen Widerstand gegen die Bewegung der Masse bildet.

Mit einem verbleibenden freien Übertrittsquerschnitt kann für besondere Anwendungen auch ein Druckausgleich zwischen dem Kocher und dem Kristallisator gewährleistet werden. Ist beispielsweise gewünscht, dass in dem Kocher und dem Kristallisator ein Unterdruck herbeigeführt wird, sind nicht separate Anschlüsse an dem Kocher und dem Kristallisator für eine Unterdruckquelle oder sogar für separate Unterdruckquellen erforderlich. Vielmehr kann über einen Anschluss des Kochers oder des Kristallisators ein Unterdruck sowohl in dem Kocher als auch in dem Kristallisator herbeigeführt werden. Ein Nebenströmungsauslass, Unterdruck- oder Vakuumanschluss zum Absaugen des Dampfes kann sowohl am Kocher als auch an beliebiger Stelle an dem Kristallisator angeordnet sein.

Möglich ist beispielsweise auf diese Weise auch, dass die Beseitigung des Wasserdampfes, welcher im Bereich des Kochers aus der Masse verdampft worden ist, über die Übertrittsöffnung durch den Kristallisator (u. U. gleichzeitig mit in dem Kristallisator erzeugtem weiteren Wasserdampf) erfolgt oder umgekehrt in dem Kristallisator erzeugter Wasserdampf durch die Übertrittsöffnung über den Kocher (gemeinsam mit weiteren, in dem Kocher erzeugten Wasserdampf) abgeführt wird.

Alternativ oder kumulativ möglich ist, dass eine Rotorübertrittsöffnung, die zwischen einer Innenfläche des Gehäuses des Kochers und dem Rotor des Kochers gebildet ist und durch welche die Masse während des Betriebs des Kochers gefördert wird, einen derartigen freien Übertrittsquerschnitt ausbildet. Es hat sich gezeigt, dass bei Vorhandensein eines derartigen freien Übertrittsquerschnittes ein etwaiger Unterdruck über einen Teil oder die gesamte Längserstreckung des Innenraums des Kochers verteilt werden kann, womit die Beseitigung des Wassers weiter verbessert und damit das Dampfvolumen weiter erhöht werden kann, u. U. auch bei einer niedrigeren Temperatur in dem Kocher.

Möglich ist auch, dass durch den freien Übertrittsquerschnitt der Ort für den Anschluss des Nebenströmungskreislaufs frei entlang der Mantelfläche des Kochers gewählt werden kann, da sich der Druck unabhängig von dem Ort des Anschlusses über den freien Übertrittsquerschnitt frei in dem Kocher verteilt.

Für die Größe der Fläche des verbleibenden freien Übertrittsquerschnitts (der Rotorübertrittsöffnung und/oder der Übertrittsöffnung) gibt es im Rahmen der Erfindung vielfältige Gestaltungsmöglichkeiten. Für einen besonderen Vorschlag der Erfindung ist die freie Fläche des verbleibenden freien Übertrittsquerschnitts mindestens 60 % (vorzugsweise mindestens 70 %, mindestens 80 %, mindestens 85 % oder sogar mindestens 90 %) der Fläche des Querschnitts der Rotorübertrittsöffnung oder mindestens 60 % (vorzugsweise mindestens 70 %, mindestens 80 %, mindestens 85 % oder sogar mindestens 90 %) der Fläche des Querschnitts der Übertrittsöffnung.

Die zu kochende Masse kann an der beheizten Innenfläche des Gehäuses des Kochers entlangfließen, wobei der Massefluss durch die Schwerkraft herbeigeführt werden kann. Möglich ist auch, dass der Massefluss unterstützt wird durch eine entsprechende Schrägstellung von Wischern, Flügeln, Schabern, Sternarmen oder Rippen des Rotors. In dem Bereich des freien Übertrittsquerschnitts bildet sich dann Wasserdampf, der in dem Nebenströmungskreislauf je nach Lage der Unterdruckanschlüsse dann im Gegenstrom- oder Gleichstromprinzip zu der Masse abgeführt werden kann.

Für einen Vorschlag der Erfindung ist in der Milchcrumb-Herstellungseinrichtung ein Nebenströmungskreislauf vorhanden, in dem Nebenluft infolge eines Druckgefälles von einem Nebenströmungseinlass zu einem Nebenströmungsauslass strömt. Vorzugsweise handelt es sich bei dem Nebenströmungskreislauf um einen Unterdruckkreislauf. Der Nebenströmungskreislauf kann dabei gleich- oder gegensinnig zu der Förderung der Masse verlaufen.

Möglich ist, dass ein Nebenströmungsauslass, insbesondere ein Unterdruck- oder Vakuumanschluss, (und sofern vorhanden, ein Nebenströmungseinlass) entweder im Bereich des Kochers oder im Bereich des Kristallisators angeordnet sind.

Möglich ist aber auch, dass
- (sofern vorhanden, ein Nebenströmungseinlass im Bereich des Kochers angeordnet ist, während) der Nebenströmungsauslass, insbesondere Unterdruck- oder Vakuumanschluss, im Bereich des Kristalisators angeordnet ist, womit dann der Nebenströmungskreislauf mit dem ausgedampften und aufgenommenen Wasserdampf gleichsinnig mit Förderung der Masse verläuft, oder
- (sofern vorhanden, der Nebenlufteinlass im Bereich des Kristalisators angeordnet ist, während) der Nebenströmungsauslass, insbesondere der Unterdruck- oder Vakuumanschluss, im Bereich des Kochers angeordnet ist, womit ein Gegenstromprinzip verwendet wird.

Bei gleichsinnigem Betrieb unterstützt der Nebenströmungskreislauf die Förderung der Masse durch den Kocher, durch die Übertrittsöffnung und/oder durch den Kristallisator.

Finden in herkömmlichen Milchcrumb-Herstellungseinrichtungen Masseleitungsrohre Einsatz, verfügen diese über einen maximalen freien Durchmesser von 100 mm. Für einen Vorschlag der Erfindung weist die Übertrittsöffnung zwischen dem Kocher und dem Kristallisator im Querschnitt eine Fläche von mindestens 8.000 mm², mindestens 10.000 mm², mindestens 15.000 mm², mindestens 20.000 mm², mindestens 50.000 mm², mindestens 100.000 mm², mindestens 150.000 mm², mindestens 200.000 mm², mindestens 300.000 mm² oder sogar mindestens 400.000 mm² auf. Für die vorgenannten Beispiele der Dimensionierung der Fläche des Übertrittsöffnung kann die Fördermenge der Masse durch den Kocher beispielsweise im Bereich von 1.000 bis 2.000 kg/Stunde, insbesondere 1.200 kg/Stunde bis 1.800 kg/Stunde, liegen.

Grundsätzlich kann im Rahmen der Erfindung ein Kocher in beliebiger konstruktiver Ausgestaltung verwendet werden.

Beispielsweise kann ein konischer Kocher mit einer konisch in Förderrichtung verjüngten Innenfläche des Gehäuses und einem entsprechend konisch verjüngten Rotor verwendet werden. Die konische Verjüngung kann dabei zu einer Durchmesserreduzierung in Richtung der Übertrittsöffnung verwendet werden, um einen nachteiligen Durchmessersprung auf dem Weg der Masse zu der Übertrittsöffnung zu reduzieren oder vollständig zu beseitigen, womit der Massefluss weiter verbessert werden kann.

Möglich ist auch, dass ein Rotor mit kreisförmigen Querschnitt des Rotorkerns und sich von dem Rotorkern radial nach außen erstreckenden Flügeln, Rippen, Schabern oder Wischern aufweist, die elastisch ausgebildet sein können und/oder gegenüber dem Rotorkern bewegbar oder Verschwenkbar sein können. Stirnseitig können die Flügel, Rippen, Schaber oder Wischer auch Dichtelement, Gleitelemente oder Schab- oder Wischelemente aufweisen. Der Kocher kann als Dünnfilmrotor mit einer Spalthöhe zwischen den Flügeln, Rippen, Schabern oder Wischern und der Innenfläche des Gehäuses des Kochers von bspw. 0,05mm bis 2,0 mm (insbesondere 0,1 mm bis 0,6 mm oder 0,1 mm bis 0, 3 mm oder 0,2 mm bis 0,5 mm) ausgebildet sein.

Möglich ist auch, dass der Rotor einen sternförmigen Querschnitt aufweist, der einen verhältnismäßig großen Innenraum des Kochers zwischen dem Rotor und der Innenfläche des Gehäuses mit großen Rotorübertrittsöffnungen gewährleistet und damit unter Umständen auch die zuvor erläuterten freien Übertrittsquerschnitte gewährleistet.

Hinsichtlich möglicher einsetzbarer Kocher wird beispielsweise auf den Kocher der Anmelderin verwiesen, der unter der Kennzeichnung "SUCROFILM" (eingetragene Marke der Anmelderin) vertrieben wird. Weitere Dünnfilmkocher und Rotoren mit sternförmigem Querschnitt, insbesondere mit Ausgestaltung als Starrflügel-Rotor, als Radialwischer-Rotor oder Wischerflügel-Rotor oder Pendelflügel-Rotor können beispielsweise der Produktinformation "Dünnschichtapparate" des Unternehmens Schulz + Partner GmbH Verfahrenstechnik (www.schulzpartner.com) entnommen werden.

Wie zuvor erläutert wurde, können freie Übertrittsquerschnitte zwischen den einzelnen Modulen der Milchcrumb-Herstelleinrichtung, insbesondere im Bereich der Übertrittsöffnung zwischen Kocher und Kristallisator und/oder im Bereich von Rotorübertrittsöffnungen, dazu dienen, einen Druckausgleich zu ermöglichen. Möglich ist aber auch, dass auf dem Weg der Masse durch die Milchcrumb-Herstelleinrichtung unterschiedliche Drücke auf die Masse einwirken sollen. Zu diesem Zweck können Innenräume der Milchcrumb-Herstellungseinrichtung durch Druckschleusen voneinander getrennt sein.

Eine derartige Druckschleuse kann als Zellradschleuse ausgebildet sein.

Vorzugsweise findet im Rahmen der Erfindung mindestens eine Druckschleuse in Ausgestaltung als ventilgesteuerte Schleuse Einsatz finden. Derartige ventilgesteuerte Schleußen sind beispielsweise von dem Unternehmen Lipp Mischtechnik GmbH bekannt (vgl. www.lippmischtechnik.de).

Eine abdichtende Zellradschleuse ermöglicht eine kontinuierliche Hindurchführung der Masse, während mittels wechselseitig arbeitenden Absperrelementen eine lediglich quasi kontinuierliche, taktweise Austragung möglich ist. Hierbei können die Absperrelemente als Ventile oder Schieber ausgebildet sein.

Ist eine Realisierung unterschiedlicher Druckniveaus im Bereich des Kochers und des Kristallisators gewünscht, kann eine Druckschleuse Einsatz finden zwischen dem Kocher und dem Kristallisator, also stromaufwärts oder stromabwärts der Übertrittsöffnung.

Für die konstruktive Ausgestaltung des Kristallisators gibt es im Rahmen der Erfindung vielfältige Möglichkeiten. So kann beispielsweise der Kristallisator als Einzelwellen-Mischer oder Doppelwellen-Mischer ausgebildet sein, wobei vorzugsweise die mindestens eine Wellenachse des Einzelwellen-Mischers oder Doppelwellen-Mischer horizontal (und vorzugsweise senkrecht zu der Rotationsachse des Rotors des Kochers) orientiert ist.

Möglich ist im Rahmen der Erfindung, dass die Milchcrumb-Herstelleinrichtung über einen dem Kristallisator nachgeordneten Trockner verfügt, wobei der Innenraum des Kristallisators unmittelbar in den Innenraum des Trockners übergehen kann oder der Trockner separat von dem Kristallisator ausgebildet sein kann und an diesem angeflanscht sein kann oder mit diesem über ein Masseleitungsrohr verbunden sein kann. Vorzugsweise findet in dem Kristallisator und dem Trockner mindestens eine durchgehende Welle mit den Mischelementen oder mindestens eine durchgehende Misch- und/oder Förderschnecke des Einzelwellen-Mischer oder Doppelwellen-Mischers Einsatz.

Sofern in dem Kristallisator einerseits und dem Trockner andererseits unterschiedliche Druckniveaus herbeigeführt werden sollen, kann zwischen dem Kristallisator und dem Trockner eine Druckschleuse angeordnet sein.

Möglich ist für einen weiteren Vorschlag der Erfindung auch, dass ausgangsseitig des Trockners eine Druckschleuse angeordnet ist, durch welche der erzeugte Milchcrumb zu einem Vorratsbehälter, einer Fördereinrichtung oder einem weiteren Prozess für die weitere Verarbeitung gelangen kann.

In dem erfindungsgemäß eingesetzten Kocher kann der Rotor hängend oder nach unten frei auskragend, fliegend gelagert sein, damit die Masse im unteren Endbereich ohne Behinderung durch eine Lagerung und unterstützt durch die Schwerkraft zu der Übertrittsöffnung gelangen kann. Für einen besonderen Vorschlag der Erfindung ist stromaufwärts der Übertrittsöffnung zwischen dem Kocher und dem Kristallisator ein Lagerkörper angeordnet. Dieser Lagerkörper dient der Lagerung des unteren Endbereichs des Rotors. Hierbei ist der Lagerkörper aber nicht als den Querschnitt verschließende Scheibe ausgebildet. Vielmehr verfügt der Lagerkörper über Durchtrittsöffnungen für die Masse, wobei vorzugsweise bei dem Durchtritt der Masse durch die Durchtrittsöffnungen des Lagerkörpers freie Übertrittsquerschnitte verbleiben, deren Fläche insbesondere mindestens 60 % (vorzugsweise mindestens 70 %, mindestens 80 %, mindestens 85 % oder sogar mindestens 90 %) der Fläche der Durchtrittsöffnung ist.

Für eine erfindungsgemäße Milchcrumb-Herstellungseinrichtung verfügt der Kocher im Ausgangsbereich, insbesondere zwischen dem unteren Endbereich des Rotors und der Übertrittsöffnung, über ein Schauglas, über die ein Betreiber der Milchcrumb-Herstellungseinrichtung den Prozess und die gekochte Masse in Augenschein nehmen kann. Alternativ oder kumulativ kann in diesem Bereich ein Temperatursensor angeordnet sein, mit dem die Temperatur der die Masse temperienden Wandung oder der gekochten Masse erfasst wird. Alternativ oder kumulativ kann in diesem Bereich ein Drucksensor angeordnet sein zwecks Erfassung des Innendrucks des Kochers in diesem Bereich. Die Messsignale des Temperatursensors und/oder des Drucksensors können dann zur Prozessüberwachung und zur Steuerung oder Regelung des Prozesses herangezogen werden.

Für einen weiteren Vorschlag der Erfindung weist die Milchcrumb-Herstellungseinrichtung eine Steuereinrichtung auf, die auch die zuvor erläuterte Steuereinrichtung und deren Funktionalität beinhalten kann. Die Steuereinrichtung ist mit Steuerlogik derart gestaltet und konfiguriert, dass eine Prozessteuerung gewährleistet wird, bei welcher die Konzentration der Masse bei Eintritt in den Kocher 65 % TS bis 75 % TS, vorzugsweise 71 % TS bis 73 % TS, ist, während die Masse eine Temperatur im Bereich von 30°C bis 80°C, vorzugsweise 40°C bis 70°C, aufweist. Hierbei gewährleistet die Prozesssteuerung die Aufbereitung der Masse vor dem Eintritt in den Kocher durch entsprechende Fördereinrichtungen, Trocknungseinrichtungen und Temperiereinrichtungen sowie Steuerung der Zusammensetzung.

Des Weiteren gewährleistet die Steuereinrichtung eine Prozesssteuerung derart, dass bei Austritt aus dem Kocher die Masse eine vorbestimmte Konzentration und eine vorbestimmte Temperatur hat. Hierbei sind die folgenden unterschiedlichen Prozessgestaltungen möglich:
a) Möglich ist, dass das Kochen mit einem nicht atmosphärischen Druck erfolgt, worunter im Folgenden verstanden wird, dass das Kochen bei einem Druck erfolgt, der kleiner ist als 950 mbar. Beispielsweise kann das Kochen unter einem Druck erfolgen, der 300 mbar bis 950 mbar beträgt oder kleiner ist als 950 mbar, kleiner ist als 800 mbar, kleiner ist als 700 mbar, kleiner ist als 600 mbar, kleiner ist als 500 mbar oder kleiner ist als 400 mbar.
   In diesem Fall liegt die durch die Prozesssteuerung zu gewährleistende Konzentration der Masse bei Austritt aus dem Kocher im Bereich von 89 % TS bis 92 % TS, während die Masse dann eine Temperatur im Bereich von 80°C bis 115°C (vorzugsweise weniger als 100°C, weniger als 95°C, weniger als 92°C oder weniger als 90°C) aufweist.
b) Möglich ist aber auch, dass das Kochen unter einem Druck erfolgt, der mindestens 950 mbar beträgt. In diesem Fall liegt die durch die Prozesssteuerung zu gewährleistende Konzentration der Masse im Bereich von 89 % TS bis 93 % TS, während dann die Masse eine Temperatur im Bereich von 115°C bis 125°C hat.

Des Weiteren gewährleistet die Steuereinrichtung eine Prozesssteuerung derart, dass in dem Kristallisator die Konzentration der Masse im Bereich von 92% TS bis 98% TS liegt. Diese Konzentration liegt dann beispielsweise im Bereich der Mitte in Förderrichtung des Kristallisators oder in einem beliebigen Abschnitt vor. Mit zunehmender Kristallisation steigt der Prozentgehalt TS. Die Prozesssteuerung gewährleistet des Weiteren, dass die Masse in dem Kristallisator eine Temperatur im Bereich von 65°C bis 85°C (vorzugsweise 70°C bis 80°C) hat, wobei diese Temperatur vorzugsweise im Bereich des Ausgangs des Kristallisators vorliegt. Mit zunehmender Trocknung erfolgt im Bereich des Kristallisators eine Verringerung der Temperatur. Möglich ist, dass im Bereich des Kristallisators eine Erwärmung der Masse durch eine Tempiereinrichtung erfolgt, wobei vorzugsweise eine Kühlung der Masse zur Abführung der Kristallisationswärme im Bereich des Kristallisators erfolgt. Im Bereich des Kristallisators wird dann ein Druck im Bereich von 150 mbar bis 350 mbar, vorzugsweise 200 mbar bis 280 mbar, erzeugt.

Sofern die Milchcrumb-Herstellungseinrichtung ausgangsseitig des Kristallisators über einen Trockner verfügt, kann die Steuereinrichtung zusätzlich eine Prozesssteuerung derart gewährleisten, dass im Bereich des Trockners die Konzentration der Masse im Bereich von 96,5 % TS bis 99,5 % TS liegt, die Masse eine Temperatur von 65°C bis 85°C hat und der Druck im Bereich von 150 mbar bis 350 mbar, vorzugsweise 200 mbar bis 280 mbar, liegt.

Ein weiterer Vorschlag der Erfindung betrifft die Aufbereitung der SCM durch die Milchcrumb-Herstellungseinrichtung. Vorgeschlagen wird, dass eine Steuereinrichtung vorhanden ist, die mit Steuerlogik derart gestaltet und konfiguriert ist, dass eine Prozesssteuerung so erfolgt, dass ein Gemisch hergestellt wird aus 84 % SCM bis 94 % SCM und 6 % Kakaolikör bis 16 % Kakaolikör, wobei die Summe der Prozentzahlen 100 % ergibt. In diesem Fall kann der Kakaolikör aus 45 % Kakaobutter bis 55 % Kakaobutter und 55 % Kakaofeststoff bis 45 % Kakaofeststoff zusammengesetzt sein. Bei der Durchmischung mit dem SCM im Prozess verfügt der Kakaolikör über einen flüssigen Zustand mit einer Temperatur im Bereich von 40°C bis 50°C. In diesem Zustand kann der Kakaolikör vor dem Eintritt in den Kocher der SCM hinzugefügt werden oder es kann eine Zuführung ausgangsseitig des Kochers oder im Bereich des Eingangs des Kristallisators erfolgen. Der Kakaolikör wird insbesondere vor dem Beginn des Kristallisationsprozesses oder während des Kristallisationsprozesses, aber vor dem Abschluss des Kristallisationsprozesses in dem Kristallisator eingemischt.

Eine weitere Lösung der der Erfindung zugrunde liegenden Aufgabe stellt ein Verfahren zur Herstellung von Milchcrumb mittels einer Milchcrumb-Herstellungseinrichtung dar. In dem Verfahren erfolgt zunächst ein Zuführen von SCM oder einer SCM und Kakaolikör beinhaltenden Masse über einen SCM-Masse-Anschluss zu einem Kocher. Die SCM oder die SCM beinhaltende Masse wird dann in dem Kocher mittels einer Heizeinrichtung unter Bewegung durch einen Rotor gekocht. Dabei und anschließend wird die gekochten SCM oder die gekochte SCM beinhaltende Masse nach unten zumindest teilweise durch die Schwerkraft durch eine Übertrittsöffnung zu einem unterhalb des Kochers angeordneten Kristallisator gefördert, der den Ausdampfraum bildet und in dem eine Kristallisation herbeigeführt wird.

Das Verfahren kann dabei die weiter oben beschriebenen weiteren Verfahrensschritte aufweisen. Insbesondere kommen die folgenden Verfahrensschritte alternativ oder kumulativ zusätzlich zum Einsatz:
a) Möglich ist, dass in dem Verfahren die in dem Kocher gekochte SCM oder SCM beinhaltende Masse mit einem Volumenstrom derart
   - durch eine Rotorübertrittsöffnung zwischen einem Gehäuse des Kochers und dem Rotor des Kochers und/oder
   - durch die Übertrittsöffnung zu dem Kristallisator
      gefördert wird, dass ein freier Übertrittsquerschnitt verbleibt. Vorzugsweise ist dabei die Fläche des verbleibenden freien Übertrittsquerschnitts
   - mindestens 60% (vorzugsweise mindestens 70 %, mindestens 80 %, mindestens 85 % oder sogar mindestens 90 %) der Fläche des Querschnitts der Rotorübertrittsöffnung und/oder
   - mindestens 60% (vorzugsweise mindestens 70 %, mindestens 80 %, mindestens 85 % oder sogar mindestens 90 %) der Fläche des Querschnitts der Übertrittsöffnung.
b) Möglich ist, dass in dem Verfahren ein Nebenluftkreislauf die Förderung der SCM oder Masse durch den Kocher und/oder durch die Übertrittsöffnung und/oder durch den Kristallisator unterstützt.
c) In dem Verfahren kann eine Übertrittsöffnung verwendet werden, deren Querschnittsfläche mindestens 8.000 mm² (vorzugsweise mindestens 10.000 mm², mindestens 15.000 mm², mindestens 20.000 mm², mindestens 50.000 mm², mindestens 100.000 mm², mindestens 150.000 mm², mindestens 200.000 mm², mindestens 300.000 mm² oder sogar mindestens 400.000 mm²) beträgt. Alternativ oder kumulativ möglich ist, dass in dem Verfahren ein Kocher verwendet wird, der als konischer Kocher ausgebildet ist und/oder einen Rotor mit kreisförmigem Querschnitt eines Rotorkerns und sich von dem Rotorkern radial nach außen erstreckenden Flügeln, Wischern, Rippen oder Schabern aufweist oder einen Rotor mit einem Sternkörper mit sternförmigem Querschnitt aufweist.
d) Des Weiteren wird vorgeschlagen, dass in dem Verfahren eine Förderung durch eine Druckschleuse hindurch erfolgt, welche unterschiedliche Druckbereich voneinander trennt.
e) In dem Verfahren kann in dem Kristallisator und/oder Trockner ein Einzelwellen-Mischer oder Doppelwellen-Mischer, vorzugsweise mit einer horizontalen Wellenachse, verwendet werden. Alternativ oder kumulativ möglich ist, dass in dem Verfahren eine Förderung der SCM oder Masse von einem Kristallisator zu einem nachgeordneten Trockner erfolgt, wobei vorzugsweise zwischen dem Kristallisator und dem Trockner eine Druckschleuse angeordnet ist, durch die unterschiedliche Druckniveaus des Kristallisators und des Trockners getrennt werden. Möglich ist des Weiteren, dass die Masse, insbesondere der hergestellte Milchcrumb, ausgangsseitig des Trockners durch eine Druckschleuse gefördert wird.
f) Möglich ist, dass in dem Verfahren ein unterer Endbereich des Rotors in einem Lagerkörper gelagert wird, der stromaufwärts der Übertrittsöffnung angeordnet ist, wobei der Lagerkörper Durchtrittsöffnungen aufweist, durch die die SCM oder Masse hindurchgefördert wird.
g) Möglich ist, dass eine Förderung durch eine Zellradschleuse erfolgt, wobei die Zellradschleuse vorzugsweise zwischen dem Kristallisator und einem oder dem Trockner angeordnet ist und/oder am Ausgang des Trockners angeordnet ist.
h) Möglich ist, dass eine Prozessüberwachung über ein im Ausgangsbereich des Kochers angeordnetes Schauglas, einen Sensor zur Erfassung einer Temperatur und/oder einen Sensor zur Erfassung eines Drucks erfolgt.
i) In dem erfindungsgemäßen Verfahren kann mittels Steuerlogik einer Steuereinrichtung eine Prozesssteuerung derart gewährleistet ist, dass
   ia) bei Eintritt in den Kocher die Konzentration der SCM oder Masse im Bereich von 65% TS bis 75% TS, vorzugsweise 71% TS bis 73% TS, liegt und die SCM oder Masse eine Temperatur im Bereich von 30°C bis 80°C, vorzugsweise 40°C bis 70°C, aufweist, und/oder
   ib) bei Austritt aus dem Kocher
      - bei einem Kochen unter einem Druck, der kleiner ist als 950 mbar, die Konzentration der SCM oder Masse im Bereich von 89% TS bis 92 % TS liegt und die SCM oder Masse eine Temperatur im Bereich von 80°C bis 115 °C aufweist oder
      - bei einem Kochen unter einem Druck, der mindestens 950 mbar beträgt, die Konzentration der SCM oder Masse im Bereich von 89% TS bis 93 % TS liegt und die SCM oder Masse eine Temperatur im Bereich von 115°C bis 125°C aufweist, und/oder
   ic) in dem Kristallisator die Konzentration der SCM oder Masse im Bereich von 92% TS bis 98% TS liegt und die SCM oder Masse eine Temperatur von 65°C bis 85°C, vorzugsweise 70°C bis 80°C, hat, wobei der Druck im Bereich von 150 mbar bis 350 mbar liegt,
   wobei vorzugsweise in dem Trockner
   - die Konzentration der Masse im Bereich von 96,5% TS bis 99,5% TS liegt,
   - die Masse eine Temperatur von 65°C bis 85°C hat und
   - der Druck im Bereich von 150 mbar bis 350 mbar liegt.
j) In dem Verfahren kann mittels Steuerlogik einer Steuereinrichtung eine Prozesssteuerung derart gewährleistet sein, dass eine Masse hergestellt wird aus 84% SCM bis 94% SCM und 6% Kakaolikör bis 16% Kakaolikör, wobei der Kakaolikör vorzugsweise aus 45% Kakaobutter bis 55% Kakaobutter und 55% Kakaofeststoff bis 45% Kakaofeststoff zusammengesetzt ist, wobei insbesondere der Kakaolikör als Flüssigkeit mit einer Temperatur im Bereich von 40°C bis 50°C zugeführt wird.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt schematisch einen Prozess mit den einzelnen Prozessschritten für die Herstellung von Milchcrumb mittels einer Milchcrumb-Herstelleinrichtung.
- **Fig. 2**: zeigt schematisch eine konstruktive Ausgestaltung einer Milchcrumb-Herstellungseinrichtung.
- **Fig. 3 bis 13**: zeigen schematisch Teilkomponenten einer Milchcrumb-Herstellungseinrichtung.

### FIGURENBESCHREIBUNG

In den Figuren sind teilweise identische oder ähnliche Komponente oder Merkmale mit denselben Bezugszeichen gekennzeichnet, wobei diese dann mit dem zusätzlichen Buchstaben a, b, ... voneinander unterschieden sein können. Auf diese Komponenten und Merkmale kann dann auch ohne den zusätzlichen Buchstabens Bezug genommen werden, womit dann eine beliebige der Komponenten oder ein beliebiges Merkmal und/oder eines oder mehreren der Komponenten oder Merkmale gemeint sein können.

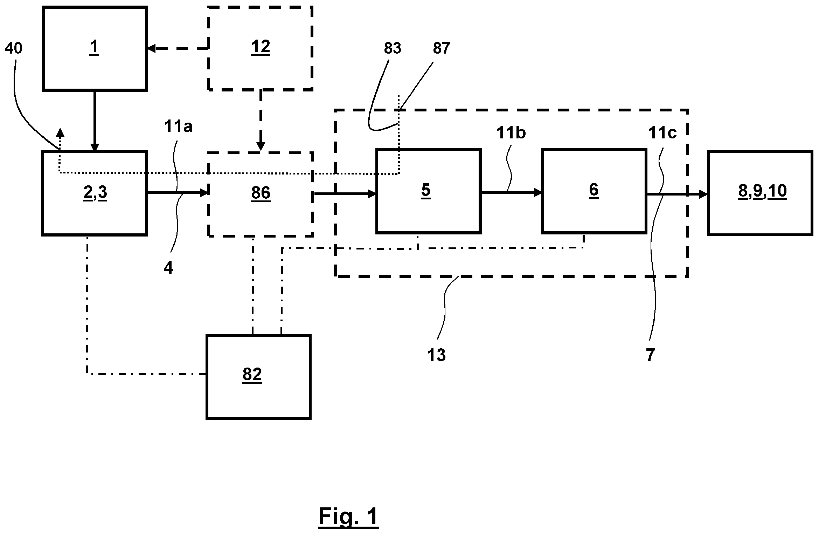

**Fig. 1** zeigt schematisch den Prozess der Herstellung von Milchcrumb 7.

Zunächst wird gezuckerte kondensierte Milch, im Folgenden SCM 1, hergestellt. Die SCM 1 wird dann einem Kocher 2, insbesondere einem Dünnfilmkocher 3, zugeführt. Bei Eintritt in den Kocher 2 hat das SCM 1 eine Konzentration von 65 % TS bis 75 % TS, während die Temperatur der SCM 1 im Bereich von 30°C bis 80°C liegt. Das Kochen des SCM 1 im Bereich des Kochers 2 kann bei einem Druck erfolgen, der kleiner ist 950 mbar, wobei dann bei Austritt aus dem Kocher 2 die Konzentration des SCM 1 im Bereich von 89 % TS bis 92 %TS ist und die Masse eine Temperatur im Bereich von 80°C bis 115°C aufweist. Hingegen kann dann, wenn das Kochen unter einem Druck von mindestens 950 mbar erfolgt, die Konzentration der Masse bei Austritt aus den Kocher 2 im Bereich von 89% TS bis 93 % TS liegen, während die Masse dann eine Temperatur im Bereich von 115°C bis 125°C aufweist.

Von dem Kocher 2 gelangt das SCM 1 über eine Übertrittsöffnung 4 zu einem Kristallisator 5. Im Bereich des Kristallisators 5 liegt die Konzentration des SCM 1 im Bereich von 92 % TS bis 98 % TS, während die Masse eine Temperatur von 65°C bis 85°C hat und der Druck im Bereich von 150 mbar bis 350 mbar liegt.

Von dem Kristallisator 5 gelangt dann die SCM 1 zu einem Trockner 6. Im Bereich des Trockners 6 liegt die Konzentration des SCM 1 im Bereich von 96,5 % TS bis 99,5 % TS, während die Masse eine Temperatur von 65°C bis 85°C hat und der Druck im Bereich von 150 mbar bis 350 mbar liegt.

Der derart erzeugte Milchcrumb 7 wird dann einem Vorratsbehälter 8, einer Fördereinrichtung 9 oder einem anschließenden Prozess 10 zugeführt. Optional möglich ist, dass je nach gewünschten Druckniveaus
- zwischen dem Kocher 2 und dem Kristallisator 5 und/oder
- zwischen dem Kristallisator 5 und dem Trockner 6 und/oder
- zwischen dem Trockner 6 und dem Vorratsbehälter 8, Fördereinrichtung 9 oder dem Prozess 10
eine Druckschleuse 11 angeordnet ist.

Möglich ist, dass bereits vor der Zuführung zu dem Kocher 2 SCM 1 mit Kakaolikör 12 gemischt worden ist (vgl. gestrichelte Elemente in Fig. 1). In diesem Fall durchläuft den in Fig. 1 dargestellten und oben beschriebenen Prozess eine Masse, die aus dem Gemisch aus der SCM 1 und dem Kakaolikör 12 besteht. Alternativ oder kumulativ möglich ist, dass der SCM 1 auf dem Weg von dem Kocher 2 zum dem Kristallisator 5, insbesondere im Ausgangsbereich des Kochers 2 oder im Eingangsbereich des Kristallisators 5, der Kakaolikör 12 zugeführt wird, womit die Durchmischung der SCM 1 und des Kakaolikörs 12 mittels des Kristallisators 5 erfolgt, der dann multifunktional ist. Auch möglich ist, dass für das Mischen der SCM 1 und des Kakaolikörs 12 zwischen dem Kocher 2 und dem Kristallisator 5 ein Mischer 86 angeordnet ist. Des Weiteren möglich ist, dass der Kristallisator 5 und der Trockner 6 eine gemeinsame Baueinheit 13 oder ein Modul 13 bilden, wie dies in Fig. 1 gestrichelt dargestellt ist.

Eine Prozesssteuerung erfolgt über eine elektronische Steuereinrichtung 82. Für die Prozesssteuerung werden der Steuereinrichtung 82 Messsignale von Sensoren bspw. für Drücke, Temperaturen, Drehzahlen, eine Feuchtigkeit und/oder Volumen- oder Massenströme zugeführt (nicht dargestellt), die von der Steuereinrichtung 82 berücksichtigt werden für die Aussteuerung oder Regelung der Prozessparameter des Kochers 2, des Kristallisators 5, des Trockners 6 und eines etwaigen Mischers 86 (vgl. in Fig. 1 die schematischen strichpunktierten Steuerleitungen oder Steuersignale). In den folgenden Figuren ist die Steuereinrichtung 82 mit dem Steuerleitungen nicht dargestellt, obwohl diese hier ebenfalls vorhanden sind.

In Fig. 1 ist mit gepunktete Linie ein Nebenströmungskreislauf 83 schematisch dargestellt, welcher für das hier dargestellte Ausführungsbeispiel in Gegenstromrichtung zu der Förderung der SCM 1 oder der Masse mit der SCM 1 orientiert ist, wobei aber auch eine umgekehrte Strömung in Gleichstromrichtung möglich ist. Vorzugsweise ist der Nebenströmungskreislauf 83 ein Unterdruck-Nebenströmungskreislauf, dessen Druckniveau beispielsweise kleiner als 950 mbar, kleiner als 800 mbar, kleiner als 500 mbar oder sogar kleiner als 400 mbar sein kann. Zu diesem Zweck kann beispielsweise der Kristallisator 5 einen Unterdruckanschluss 87 aufweisen, der durch freie Übertrittsquerschnitte, in denen kein SCM 1 oder keine Masse angeordnet ist, durch den Innenraum des Kristallisators 5, die Übertrittsöffnung 4 und den Kocher 2 mit einem Unterdruckanschluss 40 des Kochers 2 verbunden ist. Hierbei kann die Strömungsrichtung in dem Nebenströmungskreislauf 83 vorgegeben sein durch das Druckgefälle zwischen den Unterdruckanschlüssen 87, 40. Es versteht sich, dass die Unterdruckanschlüsse 40, 87 auch an beliebigen anderen Stellen angeordnet sein können. Um lediglich ein die Erfindung nicht beschränkendes weiteres Beispiel zu nennen, können auch die Unterdruckanschlüsse beide an dem Kocher 2 vorgesehen sein, wobei dann ein Unterdruckanschluss im Eingangsbereich des Kochers 2 angeordnet ist und der andere Unterdruckanschluss im Ausgangsbereich des Kochers 2 angeordnet ist.

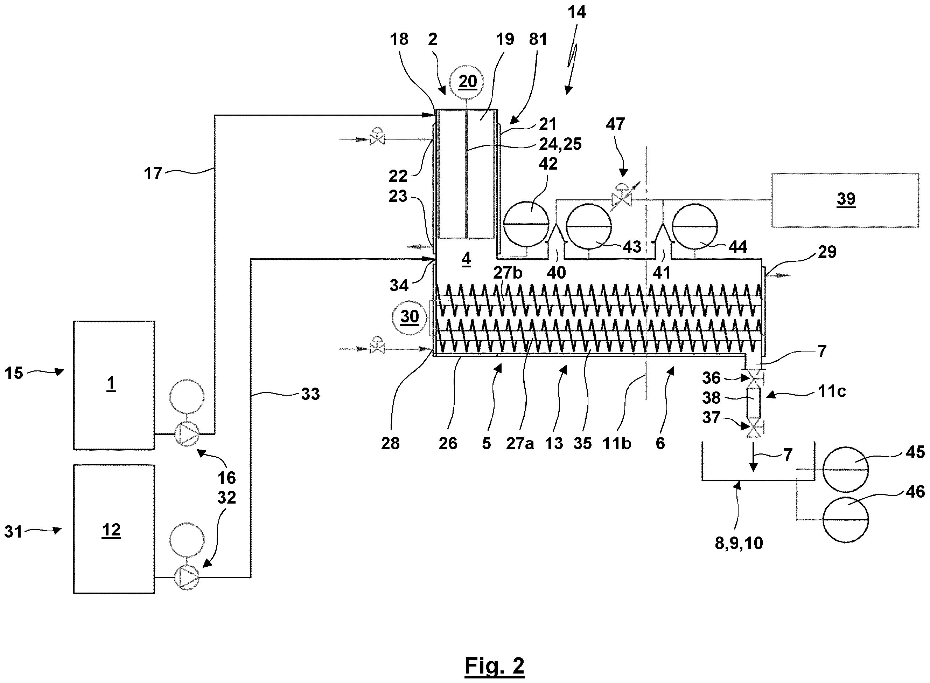

**Fig. 2** zeigt eine Milchcrumb-Herstellungseinrichtung 14, mit der der zuvor erläuterte und in Fig. 1 dargestellte Prozess durchgeführt werden kann. Die Milchcrumb-Herstellungseinrichtung 14 verfügt über eine Bereitstellungsstation 15 für SCM 1. Bei der Bereitstellungsstation 15 kann es sich um einen Vorratsbehälter oder einen Herstellungsprozess für SCM 1 handeln. Von der Bereitstellungsstation 15 gelangt die SCM über eine Pumpe 16 und eine SCM-Eingangsleitung 17 zu einem SCM-Masse-Anschluss 18 des Kochers 2.

Der Kocher 2 weist einen Rotor 19 auf, der über einen Motor 20 angetrieben ist. Eine Temperierung des Kochers 2 erfolgt durch dessen Ausstattung mit einer Heizeinrichtung 81 in Form eines Wärmetauschers. Hierzu wird ein Gehäuse 21 von einem temperienden Fluid durchströmt, welches dem Gehäuse 21 über einen Temperier-Eingangsanschluss 22 zugeführt wird und aus dem Gehäuse 21 über einen Temperier-Ausgangsanschluss 23 abgeführt wird. Ein Wärmeaustausch erfolgt dann über eine Innenfläche des Gehäuses 21, die mit der SCM 1 in Kontakt kommt.

Eine Rotationsachse 24 und eine Längsachse 25 des Gehäuses 21 und des Innenraums sind vertikal orientiert. Von dem SCM-Masse-Anschluss 18 bewegt sich die SCM 1 unter zunehmender Erwärmung vertikal nach unten.

Die Baueinheit 13 mit dem Kristallisator 5 und dem Trockner 6 ist horizontal orientiert. Der Kocher 2 ist von oben auf die Baueinheit 13 aufgesetzt und beispielsweise angeflanscht oder anderweitig verbunden. Ein Gehäuse 26 des Kristallisators 5 und das Gehäuse 21 des Kochers 2 verfügen über Gehäuseöffnungen, die die Übertrittsöffnung 4 zwischen dem Kocher 2 und dem Kristallisator 5 bilden, durch die die SCM 1 von dem Kocher 2 zu dem Kristallisator 5 übertreten kann durch Bewegung vertikal nach unten infolge der Schwerkraft oder unter Unterstützung durch die Schwerkraft.

Der Kristallisator 5 und der Trockner 6 verfügen über mindestens eine Misch- und/oder Förderschnecke 27a, 27b, deren Rotationsachse horizontal und damit vertikal zu der Rotationsachse 24 des Rotors 19 des Kochers 2 orientiert ist. ### Für das in Fig. 2 dargestellte Ausführungsbeispiel verfügen der Kristallisator 5 und der Trockner 6 über zwei miteinander kämmende Misch- und/der Förderschnecken 27a, 27b, womit ein selbstreinigender Massetransport gewährleistet werden kann. Die Verdrehung der Misch und/oder Förderschnecken 27a, 27b erzeugt in synchronisierter Weise mittels mindestens eines Motors 30.

Für das dargestellte Ausführungsbeispiel erstrecken sich die Misch- und/oder Förderschnecken 27a, 27b einstückig durch den Kristallisator 5 und den Trockner 6. Auch das Gehäuse 26 des Kristallisators 5, des Trockners 6 und/der der Baueinheit 13 ist als Wärmetauscher ausgebildet, sodass dieses über einen Temperier-Eingangsanschluss 28 und einen Temperier-Ausgangsanschluss 29 verfügen/verfügt.

Die Milchcrumb-Herstellungseinrichtung 14 weist auch eine Bereitstellungsstation 31 für Kakaolikör 12 auf, bei welcher es sich um einen Vorratsbehälter oder einen Herstellungsprozess für Kakaolikör 12 handeln kann. Die Förderung des Kakaolikör 12 erfolgt mittels einer Pumpe 32. Für das dargestellte Ausführungsbeispiel erfolgt die Zuführung des Kakaolikörs 12 von der Pumpe 32 über eine Kakaolikör-Eingangsleitung 33 zu einem Kakaolikör-Anschluss 34, der für das dargestellte Ausführungsbeispiel im Übergangsbereich von dem Kocher 2 zu dem Kristallisator 5 vorgesehen ist. Der Kakaolikör 12 wird somit bei dem Austritt des SCM 1 aus dem Kocher 2 der SCM 1 zugeführt und das mit dem Kakaolikör 12 angereicherte SCM 1 wird dann in dem Kristallisator 5 mittels der Misch- und/oder Förderschnecken 27 durchmischt. Vorzugsweise erfolgt die Zuführung des Kakaolikörs 12 im Bereich der Übertrittsöffnung 4.

Die mit der SCM 1 und dem Kakaolikör 12 gebildete Masse 35 tritt nach der Kristallisation im Bereich des Kristallisators 5 und der Trocknung im Bereich des Trockners 6 an dem stromabwärtigen Ende des Trockners 6 über eine Druckschleuse 11c aus dem Trockner 6 aus. Die Durchschleuse 11c verfügt über ein Druckschleusen-Eingangsventil 36 und ein Druckschleusen-Ausgangsventil 37, zwischen denen eine Schleusenkammer 38 gebildet ist. Ist das Druckschleusen-Eingangsventil 36 geöffnet, aber das Druckschleusen-Ausgangsventil 37 geschlossen, kann ausgangsseitig des Trockners 6 Milchcrumb 7 von dem Trockner 6 in die Schleusenkammer 38 gefördert werden, ohne dass eine Verbindung mit der Umgebung besteht, sodass kein Druckverlust in den Trockner 6 erfolgt. Ist die Schleusenkammer 38 hinreichend gefüllt, kann das Druckschleusen-Eingangsventil 36 geschlossen werden, während das Druckschleusen-Ausgangsventil 37 geöffnet wird. Der Milchcrumb 7 kann dann aus der Schleusenkammer 38 ausgebracht werden und dem Vorratsbehälter 8, der Fördereinrichtung 9 oder einem nachfolgenden Prozess 10 zugeführt werden. Ist die Schleusenkammer 38 entleert, kann das Druckschleusen-Ausgangsventil 37 geschlossen und das Druckschleusen-Eingangsventil 36 wieder geöffnet werden.

Optional kann in dem Kristallisator 5 einerseits und dem Trockner 6 andererseits ein unterschiedliches Druckniveau gewährleistet werden. In diesem Fall ist zwischen dem Kristallisator 5 und dem Trockner 6 eine Druckschleuse 11b angeordnet, die in Fig. 2 lediglich symbolartig mit der strichpunktierten Linie dargestellt ist. Möglich ist, dass wie dargestellt die Druckschleuse 11b von den Misch- und/oder Förderschnecken 27 durchsetzt ist. Vorzugsweise verfügen dann aber der Kristallisator 5 und der Trockner 6 über separate Misch- und/oder Förderschnecken 27.

Zur Erzeugung eines Unterdrucks oder zur Erzeugung eines Nebenstroms 83 verfügt die Milchcrumb-Herstellungseinrichtung 14 über eine Unterdruckquelle 39. Die Unterdruckquelle 39 ist über einen Unterdruckanschluss 40 an den Kristallisator 5 angeschlossen sowie über einen Unterdruckanschluss 41 an den Trockner 6 angeschlossen. Nicht in Fig. 2 dargestellt sind etwaige Luftzufuhranschlüsse, über die bei einem erwünschten Nebenstrom Luft auf einem höheren Druckniveau als das Druckniveau der Unterdruckquelle 39 zu dem Kocher 2, dem Kristallisator 5 und/oder dem Trockner 6 zugeführt wird, sodass die Luft in dem Nebenstrom von diesem Luftzuführanschluss durch den Kocher 2, den Kristallisator 5 und/oder den Trockner 6 zu den Unterdruckanschlüssen 40, 41strömen kann. Der Nebenströmungskreislauf 83 kann genutzt werden, um den Transport der SCM 1 oder der Masse 35 herbeizuführen oder zu unterstützen und/oder den freigesetzten Wasserdampf abzuführen. Über zwischen der Unterdruckquelle 38 und den Unterdruckanschlüssen 40, 41 angeordnete und manuell oder elektronisch gesteuerte Ventile 47 kann eine Steuerung der Drücke in dem Kocher 2, dem Kristallisator 5 und dem Trockner 6 sowie eine Steuerung oder Regelung des Nebenströmungskreislauf 83 erfolgen.

Für die Prozesssteuerung durch eine Steuereinrichtung 82 können die Prozessbedingungen in dem Kocher 2, dem Kristallisator 5 und/oder dem Trockner 6 mittels Sensoren erfasst und berücksichtigt werden. Beispielhaft ist in Fig. 2 dargestellt, dass mittels eines Sensors 42 eine Temperatur, beispielsweise des Gehäuses 21, des temperierenden Fluids, in dem Kocher 2, im Bereich der Übertrittsöffnung 4, im Bereich des Kristallisators 5 und/oder im Bereich des Trockners 6 erfasst wird. Mittels eines Sensors 43 bspw. wird der Druck in dem Kristallisator 5 erfasst. Mittels eines Sensors 44 wird bspw. der Druck in dem Trockner 6 erfasst. Sensoren 45, 46 können bspw. die Temperatur des Milchcrumbs 7 und eine physikalische Eigenschaft des Milchcrumbs 7, beispielsweise die Partikelgröße oder eine Restfeuchtigkeit, im Bereich des Vorratsbehälters 8, der Fördereinrichtung 9 oder des anschließenden Prozesses 10 erfassen.

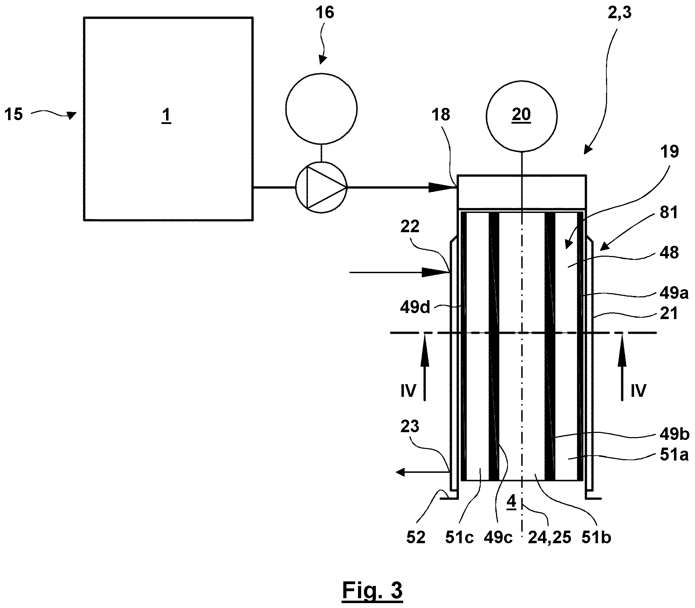

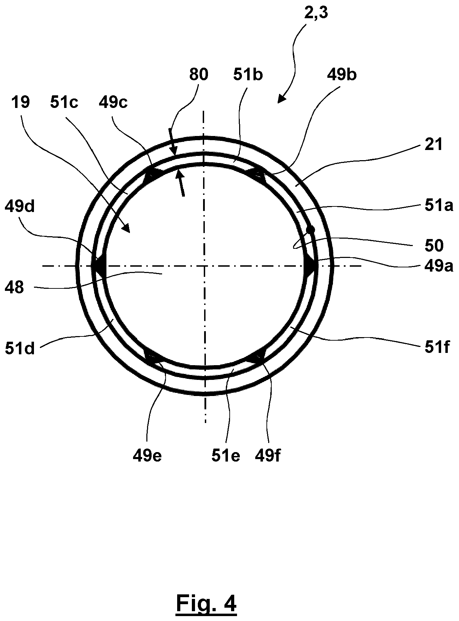

**Fig. 3** und der Querschnitt IV-IV gemäß **Fig. 4** zeigen eine mögliche Ausgestaltung eines Kochers 2 als Dünnfilmkocher 3. Der Dünnfilmkocher 3 verfügt über einen Rotor 19 mit einem zylindrischen Rotorkern 48 und sich radial von dem Rotorkern 48 nach außen erstreckenden Flügeln, Rippen, Schabern oder Wischern 49, die hier gleichmäßig über den Umfang des Rotorkerns 48 verteilt angeordnet sind. Für das in Fig. 3 und 4 dargestellte Ausführungsbeispiel erstrecken sich die Flügel, Rippen, Schaber oder Wischer 49 parallel zur Längs- und Rotationsachse 14, 25 des Rotors 19 und über die gesamte Längserstreckung desselben. Durchaus möglich ist aber auch, dass sich die Flügel, Rippen, Schaber oder Wischer 49 lediglich über einen Teil der Längserstreckung des Rotors 19 erstrecken, wobei dann auch mehrere Flügel, Rippen, Schaber oder Wischer 49 über die Längserstreckung verteilt sein können. Ebenfalls möglich ist, dass die Flügel, Rippen, Schaber, Wischer 49 gegenüber der Orientierung der Rotationsachse 24 angestellt sind, sodass sich diese wendelartig um die Mantelfläche des Rotorkerns 48 erstrecken. Die Flügel, Rippen, Schaber, Wischer 49 können einstückig von dem Rotorkern 48 ausgebildet sein oder mehrteilig ausgebildet sind, beispielsweise mit Gleit-, Wisch-, Schab- oder Dichtelementen im Bereich ihrer radial außenliegenden Stirnseiten. Möglich ist, dass die Flügel, Rippen, Schaber, Wischer 49 in gleitendendem Kontakt mit der zylindrischen Innenfläche 50 des Gehäuses 21 stehen oder mit dieser einen geringen Spalt ausbilden. Möglich ist auch, dass die Flügel, Rippen, Schaber, Wischer 49 radial verschiebbar oder verschwenkbar an dem Rotorkern 48 gelagert sind.

Die Innenfläche 50 des Gehäuses 21, die Flügel, Rippen, Schaber oder Wischer 49 und die Mantelfläche des Rotorkerns 48 begrenzen hohlzylindersegmentförmige Rotorübertrittsöffnungen 51, im Bereich welcher die SCM 1oder die Masse 35 infolge der Schwerkraft in Richtung der Längs- und Rotationsachse 24, 25 nach unten und in Richtung der Übertrittsöffnung 4 sowie des Kristallisators 5 gefördert wird. Im Bereich der temperierten Innenfläche 50 erfolgt dabei eine Erwärmung und das Kochen der SCM 1 oder Masse 35. Die Rotorübertrittsöffnungen 51 sind dabei nicht vollständig mit der SCM oder Masse gefüllt, sondern es verbleiben freie Übertrittsquerschnitte. Möglich ist, dass der Nebenströmungskreislauf 83 durch diese freien Übertrittsquerschnitte strömt.

Im unteren, dem Kristallisator 5 zugewandten Endbereich verfügt das Gehäuse 21 über einen Flansch 52. Der Flansch 52 des Gehäuses 21 des Kochers 2 kann unter Abdichtung mit einem Flansch 53 des Kristallisators 5 verbunden werden. Im unteren Endbereich und innenliegend von dem Flansch 52 sowie unter dem Rotor 19 ist das Gehäuse 21 im Bereich einer Gehäuseöffnung offen unter Ausbildung der Übertrittsöffnung 4. Für das dargestellte Ausführungsbeispiel ist das Gehäuse 21 im unteren Endbereich hülsenförmig mit einer Art Gehäusestutzen ausgebildet und der Gehäusestutzen und die Übertrittsöffnung 4 verfügen über einen Durchmesser, der dem Durchmesser der Innenfläche 50 des Gehäuses 21 im Bereich des Rotors 19 entspricht, wobei der Durchmesser der Übertrittsöffnung 4 auch infolge einer konischen Verjüngung oder Aufweitung des Gehäusestutzens größer oder kleiner sein kann, beispielsweise um mehr als 10 %, mehr als 20 % oder mehr als 30 % größer oder kleiner sein kann.

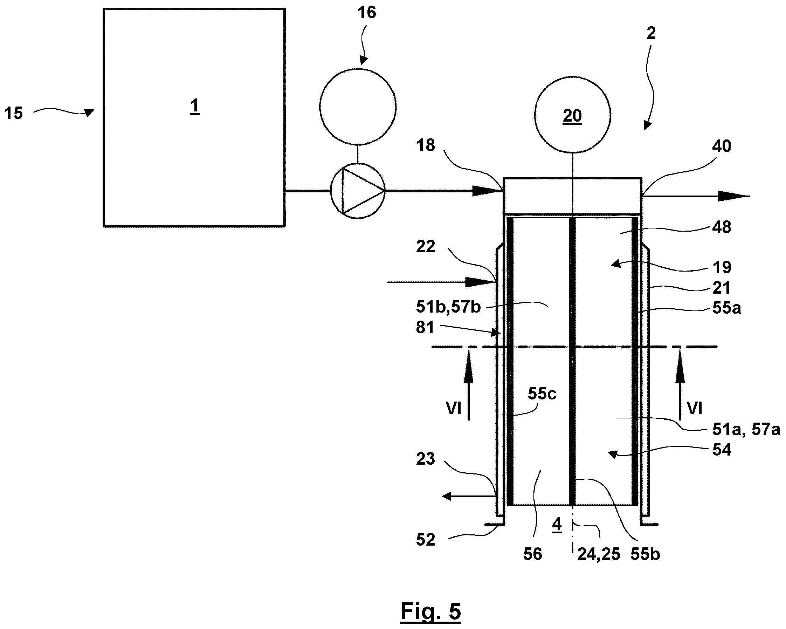

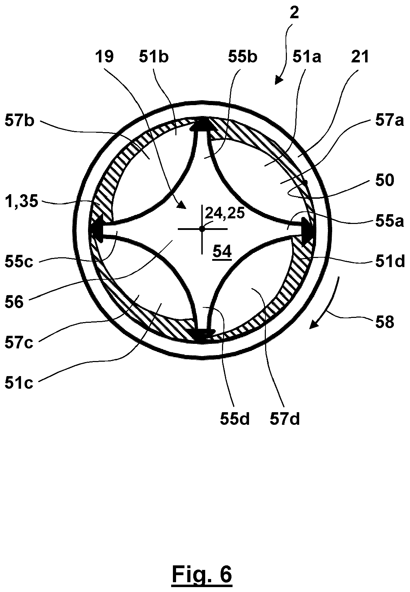

In **Fig. 5** und in dem Querschnitt VI-VI gemäß **Fig. 6** ist ein alternativ einsetzbarer Kocher 2 dargestellt, welcher bis auf den Rotor 19 grundsätzlich entsprechend dem Kocher 2 gemäß Figuren 3 und 4 ausgebildet sein kann, sodass auf die diesbezügliche Beschreibung verwiesen wird. Der Rotor 19 des Kochers 2 gemäß Fig. 5 und 6 verfügt über einen ein- oder mehrteiligen Sternkörper 54 mit Sternarmen 55, die sich radial von einem Sternkern 56 erstrecken. Hierbei gehen benachbarte Sternarme 55 über einen konkaven Kreisbogenquerschnitt ineinander über, was zur Folge hat, dass die zwischen Rotor 19 und der Innenfläche 50 des Gehäuses 21 gebildeten Rotorübertrittsöffnungen 51 im Querschnitt durch einen Kreisbogenabschnitt, der von der Innenfläche 50 gebildet ist, sowie einen entgegengesetzt gewölbten Kreisbogenabschnitt des Sternkörpers 54 begrenzt sind. Für eine Verdrehung des Rotors 19 in eine Drehrichtung 58 ist in Fig. 6 schematisch auch die SCM 1 oder Masse 35 im Bereich der Innenfläche 50 dargestellt. Zu erkennen sind hier die verbleibenden freien Übertrittsquerschnitte 57 zwischen dem Rotor 19 und dem Gehäuse 21, die nicht mit der SCM 1 oder Masse 35 gefüllt sind. Auf diese Weise ist eine nach unten fließende Bewegung der SCM 1 oder Masse 35 mit einem verminderten Widerstand ermöglicht und auch die Applikation eines Unterdrucks auf die SCM 1 oder Masse 35 während des Kochens und/oder die Durchströmung des Kochers 2 im Gleichstromprinzip oder Gegenstromprinzip ermöglicht.

Für das in Fig. 5 und 6 dargestellte Ausführungsbeispiel ist beispielhaft im oberen Endbereich des Gehäuses 21 und des Kochers 2 ein Unterdruckanschluss 40 dargestellt, der ermöglicht, dass über einen Luftzufuhranschluss, der beispielsweise im unteren Endbereich des Kochers (nicht dargestellt), im Bereich des Kristallisators 5 oder sogar im Bereich des Trockners 6 angeordnet ist, zugeführte Luft nach Durchströmung des Kochers 2 im Gegenstromprinzip unter Mitnahme des Wasserdampfes abgeführt werden kann.

Für das in Figuren 5 und 6 dargestellte Ausführungsbeispiel sind die von den Sternarmen 55 gebildeten Flügel, Rippen, Schaber oder Wischer 49 parallel zur Rotationsachse 24orientiert, während alternativ auch möglich ist, dass diese angestellt sind oder sich wendelförmig um die Rotationsachse 24 erstrecken.

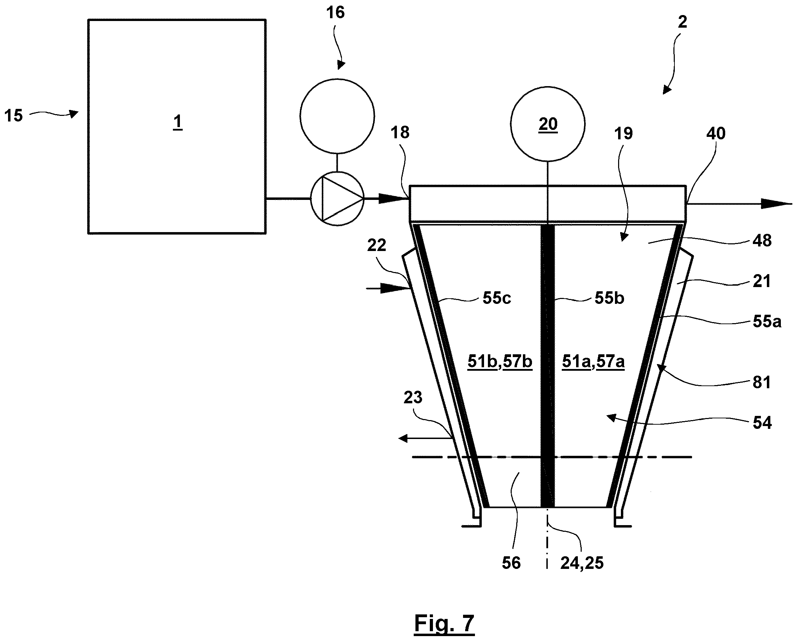

**Fig. 7** zeigt eine Ausführungsform eines Kochers 2, die grundsätzlich dem in Figuren 5 und 6 dargestellten Ausführungsbeispiel entspricht. Allerdings sind hier sowohl der Rotor 19 mit Sternkörper 54 als auch das Gehäuse 21 mit der Innenfläche 50 konusförmig verjüngt ausgebildet. Der Durchmesser verringert sich somit in Förder- oder Fließrichtung der SCM 1 oder Masse. Diese Ausführungsform kann beispielsweise genutzt werden, wenn der Flansch 52 und die Übertrittsöffnung 4 einen kleineren Durchmesser aufweisen sollen als der Durchmesser des Kochers 2 im Eintrittsbereich der SCM 1 oder Masse.

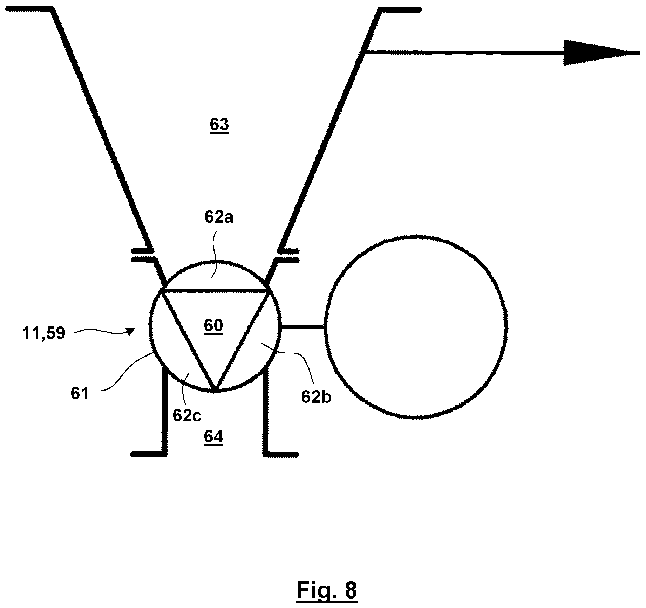

**Fig. 8** zeigt symbolartig eine Ausgestaltung einer Druckschleuse 11, die hier als Zellradschleuse 59 ausgebildet ist. Die Zellradschleuse 59 verfügt über ein verdrehtes Zellrad 60, welches mit einer zylindrischen Innenfläche eines Gehäuses 61 abgedichtete Zellradkammern 62 ausbildet. Eine Zellradkammer 62 kann zunächst mit einer Eingangsseite 62 der Zellradschleuse 59 verbunden sein, während über die Dichtkanten des Zellrades 60 die Verbindung mit einer Ausgangsseite 64 der Zellradschleuse 59 gesperrt ist. Nach einer Verdrehung des Zellrades 60 kann dann die jeweilige Zellradkammer 62 mit der Ausgangsseite 64 verbunden werden, während die Verbindung mit der Eingangsseite 63 abgesperrt ist. Auf diese Weise kann ein Durchtritt der SCM 1 oder Masse 35 durch die Zellradschleuse 59 ermöglicht werden, ohne dass ein Druckausgleich zwischen der Eingangsseite 63 und der Ausgangsseite 64 erfolgt.

Ist gewünscht, dass zwischen dem Kocher 2 und dem Kristallisator 5 ein Druckunterschied aufrechterhalten wird, kann zwischen dem Kocher 2 und dem Kristallisator 5 eine Zellradschleuse 59 gemäß Fig. 8 angeordnet sein.

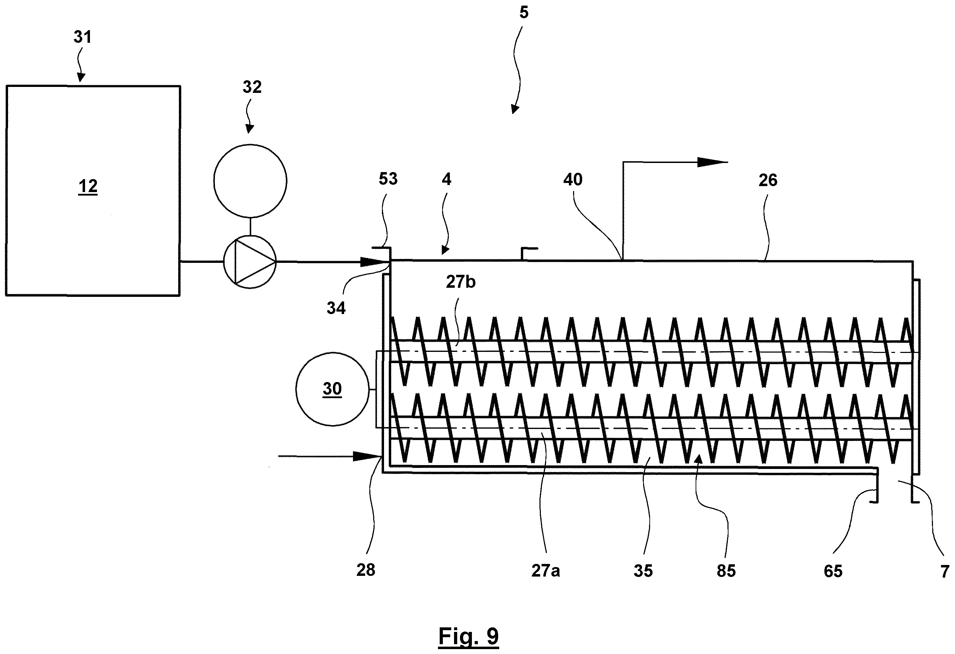

**Fig. 9** zeigt schematisch ein Ausführungsbeispiel eines Kristallisators 5. Der Kristallisator 5 verfügt auf der Oberseite des Gehäuses 26 über einen Flansch 53, im Bereich dessen der Kristallisator 5 mit dem Flansch 52 des Kochers 2 verbunden werden kann. Hierbei ist die Gehäuseöffnung des Gehäuses 26 vorzugsweise mit einer Geometrie oder einem Durchmesser ausgestattet, die bzw. der dem Durchmesser oder der Geometrie der ausgangsseitigen Gehäuseöffnung des Gehäuses 21 des Kochers 2 und damit der Übertrittsöffnung 4 entspricht.

Wenn die Zufuhr des Kakaolikörs 12 nicht bereits zuvor erfolgt ist, kann das Gehäuse 26 des Kristallisators 5 über den Kakaolikör-Anschluss 34 für die Zuführung des Kakaolikörs 12 verfügen. Des Weiteren verfügt das Gehäuse 26 über den Unterdruckanschluss 40, der (ggf. unter Zwischenschaltung steuernder oder regelnder Ventileinrichtungen) mit der Unterdruckquelle 39 verbindbar ist.

Zu erkennen sind in Fig. 9 die beiden ineinander eingreifenden oder miteinander kämmenden Mische- und/oder Förderschnecken 27a, 27b, die in synchronisierter Weise von dem Motor 30 angetrieben werden. Der Kristallisator 5 ist hier als Doppelwellen-Mischer 85 ausgebildet.

Ausgangsseitig verfügt der Kristallisator 5 über einen Ausgabeanschluss 65, im Bereich dessen die kristallisierte Masse 35 abgegeben wird. An den Ausgabeanschluss 65 kann eine Druckschleuse 11, beispielsweise auch eine Zellradschleuse 59 gemäß Fig. 8, angeschlossen sein. An den Ausgabeanschluss 65 oder gegebenenfalls die hieran angeschlossene Zellradschleuse 59 kann dann ein Trockner 6 angeschlossen werden oder es erfolgt eine anderweitige Verarbeitung.

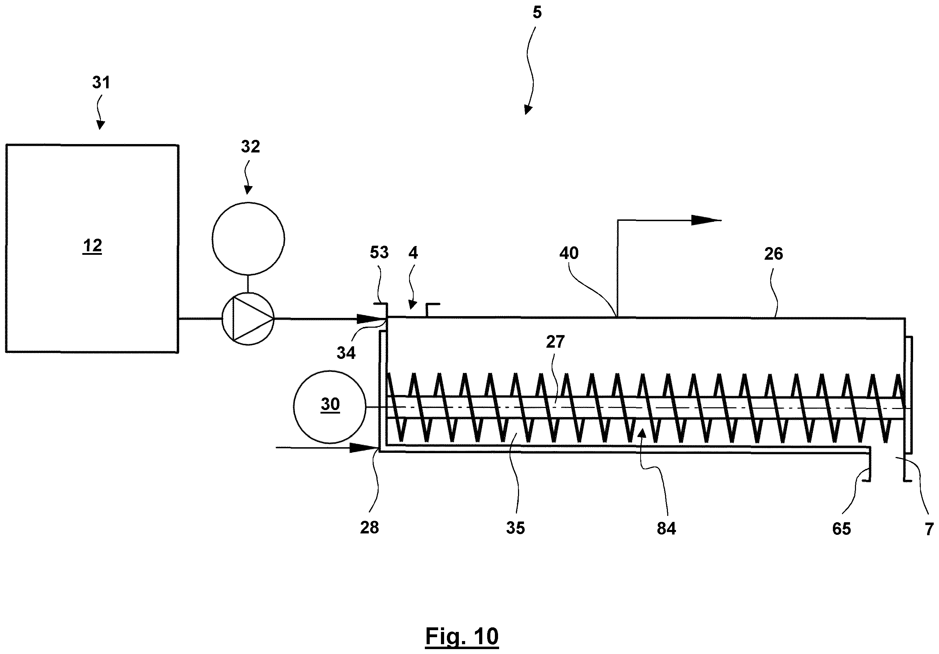

**Fig. 10** zeigt eine alternative Ausgestaltung des Kristallisators 5, bei welcher lediglich eine Misch- und/oder Förderschnecke 27 Einsatz findet (bei ansonsten grundsätzlich Fig, 9 entsprechender Ausgestaltung). Der Kristallisator 5 ist hier somit als Einzelwellen-Mischer 84 ausgebildet.

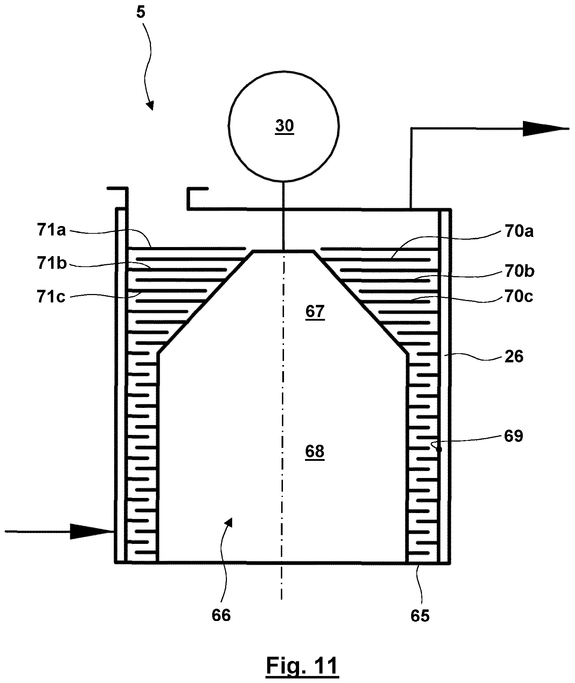

Während gemäß Figuren 9 und 10 der Kristallisator 5 Misch- und/oder Förderschnecken 27 aufweist, deren Längs- und Rotationsachse horizontal und damit senkrecht zu der Rotationsachse 24 des Kochers 2 orientiert ist, zeigt **Fig. 11** eine Ausgestaltung eines Kristallisators 5 mit einer vertikalen Rotationsachse eines Rotors 66, sodass auch hier eine Förderung der Masse 35 durch die Schwerkraft zumindest unterstützt wird.

Der Rotor 66 verfügt für dieses Ausführungsbeispiel über einen eingangsseitigen Konusabschnitt 67, an den in Förder- oder Fließrichtung ein Zylinderabschnitt 68 anschließt. Hingegen ist die Innenfläche 69 des Gehäuses 26 des Kristallisators 5 sowohl im Bereich des Konusabschnittes 67 als auch im Bereich des Zylinderabschnittes 68 zylindrisch.

Von dem Rotor 26 erstreckten sich Finger oder Lamellen 70 radial nach außen. Die Finger oder Lamellen 70 sind in Längsrichtung versetzt angeordnet zu sich radial nach innen von der Innenfläche 69 des Gehäuses 26 erstreckenden Fingern oder Lamellen 71. Die Relativbewegung der Finger oder Lamellen 70, 71 infolge der Rotation des Rotors 66 erzeugt die für die Kristallisation genutzte Scherwirkung der Masse 35. Im unteren Endbereich verfügt der Kristallisator 5 gemäß Fig. 11 über einen hier nicht näher spezifizierten Ausgabeanschluss 65, für den das zuvor Gesagte entsprechend gilt.

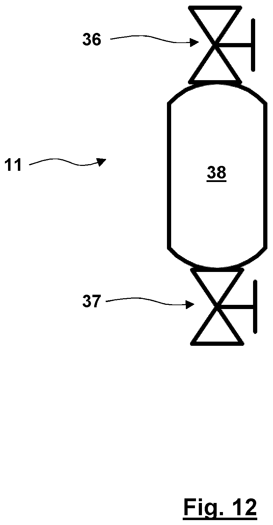

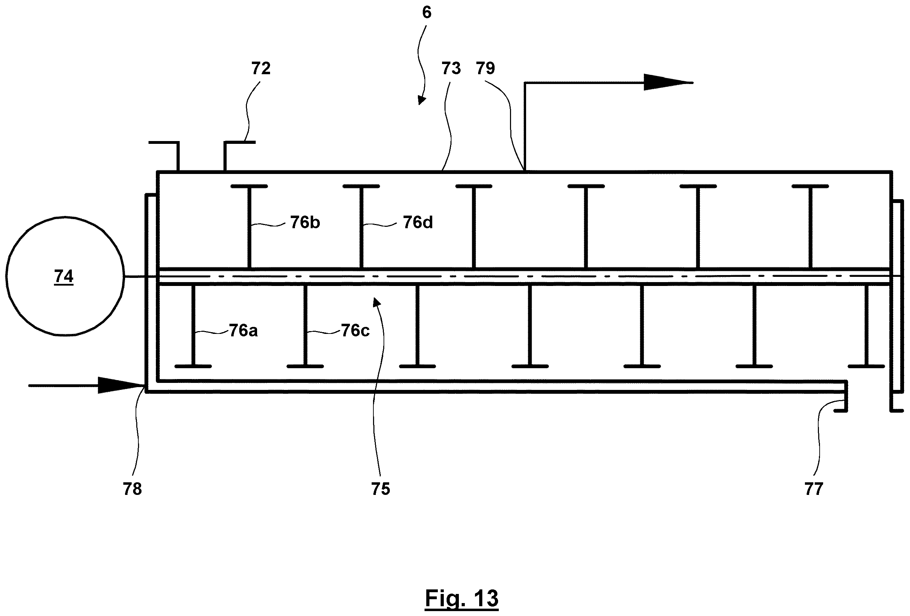

**Fig. 12** zeigt stark schematisiert eine Ausgestaltung einer Druckschleuse 11 mit einem Druckschleusen-Eingangsventil 36, einem Druckschleusen-Ausgangsventil 37 und einer Schleusenkammer 38. Möglich ist beispielsweise, dass die Druckschleuse 11 gemäß Fig. 12 eingangsseitig des Druckschleusen-Eingangsventils 36 mit einem Kristallisator 5 gemäß einer der in Figuren 9 bis 11 dargestellten Ausführungsformen verbunden wird, während die Druckschleuse 11 gemäß Fig. 12 ausgangsseitig des Druckschleusen-Ausgangsventils 37 mit einem Trockner 6 (beispielsweise einem Trockner, wie dieser in Fig. 13 dargestellt ist) verbunden ist oder hier eine Zuführung der kristallisierten Masse zu einem weiteren Prozessschritt erfolgt.

**Fig. 13** zeigt schematisch beispielhaft eine mögliche Ausgestaltung eines Trockners 6. Im Bereich eines Eingangsanschlusses 72 wird dem Trockner 6 die mit dem Kristallisator 5 kristallisierte Masse 35 zugeführt. In dem Gehäuse 73 des Trockners 6 rotiert infolge des Antriebs durch einen Motor 74 eine Misch- und/oder Förderwelle 75, von welcher sich radial Misch- und/oder Förderelemente 67 erstrecken, die über den Umfang und in Längsrichtung verteilt angeordnet sind und für eine weitere Durchmischung und Scherung der Masse 35 sorgen. Die Ausgabe der dann getrockneten Masse, nämlich des erzeugten Milchcrumbs 7, erfolgt über einen Ausgabeanschluss 77. An den Ausgabeanschluss 77 kann dann eine Druckschleuse 11, insbesondere eine Zellradschleuse 59 gemäß Fig. 8 oder eine Druckschleuse gemäß Fig. 12, anschließen, über welche dann unter Drucksicherung die Abgabe des Milchcrumb 7 an den Vorratsbehälter 8, die Fördereinrichtung 9 oder den anschließenden Prozess 10 erfolgen kann.

Für eine Temperierung der Masse im Bereich des Trockners 6 verfügt der Trockner 6 über mindestens einen Temperieranschluss 78.

Zur Vorgabe des Druckes und/oder zur Herbeiführung eines etwaigen Nebenstroms verfügt der Trockner 6 des Weiteren über mindestens einen Unterdruckanschluss 79.

In einer Milchcrumb-Herstelleinrichtung 14 sind vorzugsweise die folgenden Komponenten in der folgenden Reihenfolge eingesetzt und in Reihenschaltung miteinander verbundenen:
- ein Kocher gemäß dem Ausführungsbeispiel gemäß Figuren 2 und 3, gemäß dem Ausführungsbeispiel in Figuren 4 und 5 oder gemäß dem Ausführungsbeispiel gemäß Figuren 6 und 7;
- eine Druckschleuse 11 gemäß dem in Fig. 8 dargestellten Ausführungsbeispiel als Zellradschleuse 59 oder gemäß dem in Fig. 12 dargestellten Ausführungsbeispiel (lediglich optional, wenn Druckunterschiede zu gewährleisten sind);
- ein Kristallisator 5 gemäß dem in Fig. 9 dargestellten Ausführungsbeispiel, gemäß dem in Fig. 10 dargestellten Ausführungsbeispiel oder gemäß dem in Fig. 11 dargestellten Ausführungsbeispiel;
- eine Druckschleuse 11 gemäß dem in Fig. 8 dargestellten Ausführungsbeispiel in Form einer Zellradschleuse 59 oder gemäß dem in Fig. 12 dargestellten Ausführungsbeispiel (lediglich optional, wenn Druckunterschiede gewährleitet werden sollen);
- ein Trockner 6 gemäß Fig. 13;
- eine Druckschleuse 11 gemäß Fig. 8 in Ausbildung als Zellradschleuse 59 oder gemäß dem in Fig. 12 Ausführungsbeispiel (lediglich optional, wenn Druckunterschiede gewährleistet werden sollen);
- ein Vorratsbehälter 8, eine Fördereinrichtung 9 oder ein anschließender Prozess 10.

Vorzugsweise erfolgt in einem Nebenströmungskreislauf 83 eine Durchströmung des Kochers 2 für das in Figuren 2 und 3 dargestellte Ausführungsbeispiel mit einem Nebenstrom in Gleichstromrichtung mit der Förderung oder dem Fließen der SCM 1 oder Masse 35, um die Förderung zu unterstützen.

Für die in Figuren 4 und 5 sowie Figuren 6 und 7 dargestellten Ausführungsbeispiele erfolgt vorzugsweise in einem Nebenströmungskreislauf 83 eine Durchströmung des Kochers 2 mit einem Nebenstrom im Gegenstromprinzip, was insbesondere über die vergrößerten Rotorübertrittsöffnungen 51 ermöglicht wird.

Möglich ist, dass abweichend zu Fig. 2 in der Bereitstellungsstation 15 bereits eine Masse 35 mit SCM 1 und Kakaolikör 12 bereitgestellt wird, die dann denn SCM-Masse-Anschluss 18 zugeführt wird und in dem Kocher 2 gekocht wird. In diesem Fall kann in Fig. 2 der Zuführstrang für den Kakaolikör 12 mit der Bereitstellungsstation 31, der Pumpe 32, der Kakaolikör-Eingangsleitung und der Kakaolikör-Anschluss 34 entfallen.

Ist der Kocher 2 mit einem Sichtfenster ausgestattet, kann der Kocher 2 in diesem Bereich auch eine innere Beleuchtung aufweisen.

Am Ende des mit der Milchcrumb-Herstellungseinrichtung 14 durchgeführten Prozesses ist krümeliger bis pulverförmiger Milchcrumb 7 hergestellt, der einen Restwassergehalt vom 0,5 bis 1,5 % aufweisen kann.

Der Milchcrumb 7 ist ein Halberzeugnis, welches lagerfähig ist, und nach Zwischenlagerung und Transport oder unmittelbar und kontinuierlich oder diskontinuierlich in einem anschließenden Prozess 10 zu Milchschokolade weiterverarbeitet wird. Dies erfolgt beispielsweise durch Mischen mit Kakaofett, Walzen, Conchieren usw. Dabei trägt der Milchcrumb 7 den Milchanteil in die Schokoladenrezeptur ein. Die Masse 35 besteht aus Milch, bei der es sich um Frischmilch oder aus Pulver rekonstruierte Milch handeln kann, Kristallzucker (Saccharose) und Kakaolikör, bei der es sich um eine Flüssigkeit aus gerösteten, gemahlenen Kakaobohnen mit ca. 50 % Fettgehalt (Kakaofett) handelt, die bei ca. 40°C fließfähig ist. Der Rotor 19 des Kochers 2 hat vorzugsweise ein Verhältnis der Länge zu dem Durchmesser von L/D=2.0 bis 6.0 oder 2.0 bis 4.0.

Für das Ausführungsbeispiel des Kochers 2 gemäß Fig. 4 liegt die Spalthöhe 80 im Bereich von 5 mm bis 20 mm, vorzugsweise 7mm bis 10 mm oder 8 mm bis 15 mm.

Vorzugsweise kann mittels der erfindungsgemäßen Milchcrumb-Herstellungseinrichtung 14 ein Kochen des SCM 1 oder Masse 35 bei einer Temperatur erfolgen, die kleiner ist als 100°C, kleiner ist 98°C, kleiner ist 95°C oder sogar kleiner ist als 92°C oder 90°C.

Der Kochprozess im Bereich des Kochers 2 und ein Ausdampfprozess im Bereich des Kristallisators 5 und/oder Trockners 6 kann unter verschiedenen Drücken von atmosphärischen Drücken bis zu einem beliebigen Unterdruck, insbesondere bis hin zu einem Unterdruck von 350 mbar, durchgeführt werden. Entsprechend dem Siedediagramm variiert dann abhängig von dem Druck die Temperatur, die herbeigeführt werden muss zum Erreichen des gewünschten Trocknungsgrades in Prozent TS. Mit der erfindungsgemäßen Milchcrumb-Herstellungseinrichtung 14 kann im Bereich des Kochers 2, des Kristallisators 5 und/oder Trockners 6 eine Reduzierung des Druckes derart erfolgen, dass ein Kochen der SCM 1 oder Masse 35 mit einer verringerten Temperatur erfolgen kann, womit insbesondere ein Karamellisierungsgrad beeinflusst werden kann und damit der letztendlich herbeigeführte Karamellgeschmack in dem finalen Schokoladeprodukt beeinflusst werden kann.

Die Löslichkeit der Saccharose ist in großem Ausmaße temperaturabhängig. Mit abnehmenden Temperaturen sinkt die Löslichkeit der Saccharose. Mit Überschreiten der Löslichkeitsgrenze zum Ende des Kochprozesses wird die Masse übersättigt und es kommt zur (spontanen) Rekristallisation der Saccharose, was gezielt im Bereich des Kristallisators 5 genutzt wird. Die Kristallisation verdrängt dann das Wasser aus der Masse, womit der Trocknungsgrad weiter in Richtung des Zieltrocknungsgrades ansteigt.

Insbesondere bei Einsatz eines Kochers 2 gemäß Figuren 5 und 6, dessen Rotor 19 einen Sternkörper 54 mit sehr großen Rotorübertrittsöffnungen 51 aufweist, kann ein erzeugter Unterdruck im gesamten Bereich des Kochers 2 und auch im Bereich der Heizfläche auf die SCM 1 oder Masse 35 wirken, was zu einem höheren Ausmaß der Verdampfung, der Ermöglichung eines Kochens bei verringerten Temperaturen sowie zu einer geringeren Karamellisierung führt.

Möglich ist, dass in dem Trockner 6 ein Unterdruck wirkt, dessen Druckhöhe noch niedriger ist als der Unterdruck in dem Kristallisator.

Möglich ist, dass am Ende des Herstellungsprozesses der erzeugte Milchcrumb 7 gesiebt wird. Mittels des Siebes abgesonderte, zu große Partikel können dann ausgesondert werden oder zusätzlich (insbesondere mechanisch) verkleinert werden.

Möglich ist, dass eine SCM 1 Einsatz findet mit 9,1 % Eiweiß, 12,8 % Laktose, 2,1 % Milchsalzen, 48,0 % Saccharose und 28,0 % Wasser. Ebenfalls möglich ist, dass eine SCM 1 Einsatz findet mit 8 % Fett, 7,6 % Eiweiß, 10,7 % Laktose, 1,7 % Milchsalzen, 45 % Saccharose und 27% Wasser. Ebenfalls möglich ist, dass eine SCM 1 Einsatz findet mit 13,0 % Fett, 6,8 % Eiweiß, 9,7 % Laktose, 1,5 % Milchsalzen, 44,0 % Saccharose oder25,0 % Wasser. Für die vorgenannten Zusammensetzungen sind auch Abweichungen von +/- 20 %, +/- 10 % oder +/- 5 % von den angegebenen Prozentzahlen möglich.

Grundsätzlich kann die SCM 0 bis 16 % Fett, 5,7 bis 11,4 % Eiweiß, 8,1 bis 16,2 % Laktose, 1,2 bis 2,4 % Milchsalze, 15 bis 30 % Saccharose und mindestens 25 % Wasser aufweisen.

Findet eine Druckschleuse 11 gemäß Fig. 12 Einsatz, kann beispielsweise eine Öffnung des Druckschleusen-Eingangsventil 36 und die Schließung des Druckschleusen-Ausgangsventils 37 für mehr als eine Minute oder mehr als drei Minuten, vorzugsweise für drei bis zehn Minuten, erfolgen. Hingegen kann dann die Schließung des Druckschleusen-Eingangsventils 36 und die Öffnung des Druckschleusen-Ausgangsventils 37 zur Ausbringung aus der Schleusenkammer 38 kürzer erfolgen, beispielsweise weniger als drei Minuten, weniger als zwei Minuten oder weniger als eine Minute.

Vorzugsweise erfolgt die Gestaltung der Prozessbedingungen derart, dass keine Kristallisierung im Kocher 2 erfolgt, sondern ausschließlich im nachgeschalteten Kristallisator 5 und/oder Trockner 6 eine Kristallisation erfolgt.

Für die Temperierung der Gehäuse findet als Heizmedium geregelter Sattdampf mit Temperaturen zwischen 110 °C bis 130 °C Einsatz. Alternativ kann als Heizmedium Thermoöl oder Druckwasser verwendet werden. Sofern eine Kühlung erfolgt, kann als Kühlmedium insbesondere Glykol verwendet werden.

Die Umfangsgeschwindigkeit der außenliegenden Endbereiche der Sternarme 55 oder Flügel, Rippen, Schaber, Wischer 49 des Rotors 19 des Kochers beträgt 2,0 m/s bis 7 m/s oder 3,0 m/s bis 6 m/s.

In der vorliegenden Anmeldung betreibt die Prozentangabe TS das Verhältnis
- des Gewichts der Masse, welcher vollständig die Feuchtigkeit entzogen ist, und
- der Masse mit der enthaltenen Feuchtigkeit.

100 % TS beschreibt somit die vollständig getrocknete Masse, während in einer Masse mit 70 %TS noch 30 % Feuchtigkeit enthaltet ist.

Sofern im vorliegenden Fall Prozentangaben (insbesondere für Zusammensetzungen oder den Trocknungsgehalt) angegeben sind, handelt es sich um Massenprozente.

Für sämtliche beanspruchten, dargestellten und/oder beschriebenen Ausführungsbeispiele kann der Nebenströmungskreislauf 83 ein offener Strömungskreislauf sein, für welchen ausschließlich Nebenströmungsauslässe vorhanden sind, die an eine Unterdruck- oder Vakuumquelle angeschlossen sind. Über den offenen Strömungskreislauf kann dann verdampftes Wasser über aus dem Prozess entfernt werden. Möglich ist aber auch, dass in dem Nebenströmungskreislauf 83 dem Prozess über einen Nebenströmungseinlass ein Medium (insbesondere Luft) zugeführt wird, die dann (nach Aufnahme des Wasserdampfes) über einen Nebenströmungsauslass wieder abgeführt wird. Vorzugsweise sind für beide genannten Varianten die Nebenströmungskreisläufe 83 als Unterdruck-Kreisläufe ausgebildet.

Abweichend zu den beschriebenen Ausführungsbeispielen ist auch möglich, dass nicht nur der Kocher 2 vertikal orientiert ist, sondern auch der Kristallisator 5 und/oder Trockner 6 vertikal orientiert sind/ist. In diesem Fall können die Rotationsachsen des Rotors 19 und etwaiger Förderschnecken oder Förderwellen parallel oder koaxial zueinander angeordnet sein, wobei diese dann über separate Antriebe angetrieben sein können. Möglich ist sogar, dass ein gemeinsamer Antrieb Förderschnecke oder Förderwelle und den Rotor 19 antreibt, die dann drehfest miteinander verbunden sein können oder sogar einstückig ausgebildet sein können.

### BEZUGSZEICHENLISTE

- 1: SCM (gesüßte kondensierte Milch)
- 2: Kocher
- 3: Dünnfilmkocher
- 4: Übertrittsöffnung
- 5: Kristallisator
- 6: Trockner
- 7: Milchcrumb
- 8: Vorratsbehälter
- 9: Fördereinrichtung
- 10: Prozess
- 11: Druckschleuse
- 12: Kakaolikör
- 13: Baueinheit, Modul
- 14: Milchcrumb-Herstellungseinrichtung
- 15: Bereitstellungsstation
- 16: Pumpe
- 17: SCM-Eingangsleitung
- 18: SCM-Masse-Anschluss
- 19: Rotor
- 20: Motor
- 21: Gehäuse
- 22: Temperier-Eingangsanschluss
- 23: Temperier-Ausgangsanschluss
- 24: Rotationsachse
- 25: Längsachse
- 26: Gehäuse
- 27: Misch- und/oder Förderschnecke
- 28: Temperier-Eingangsanschluss
- 29: Temperier-Ausgangsanschluss
- 30: Motor
- 31: Bereitstellungsstation
- 32: Pumpe
- 33: Kakaolikör-Eingangsleitung
- 34: Kakaolikör-Anschluss
- 35: Masse
- 36: Druckschleusen-Eingangsventil
- 37: Druckschleusen-Ausgangsventil
- 38: Schleusenkammer
- 39: Unterdruckquelle
- 40: Unterdruckanschluss
- 41: Unterdruckanschluss
- 42: Sensor
- 43: Sensor
- 44: Sensor
- 45: Sensor
- 46: Sensor
- 47: Ventil
- 48: Rotorkern
- 49: Flügel, Rippe, Schaber oder Wischer
- 50: Innenfläche
- 51: Rotorübertrittsöffnung
- 52: Flansch
- 53: Flansch
- 54: Sternkörper
- 55: Sternarm
- 56: Sternkern
- 57: freier Übertrittsquerschnitt
- 58: Drehrichtung
- 59: Zellradschleuse
- 60: Zellrad
- 61: Gehäuse
- 62: Zellradkammer
- 63: Eingangsseite
- 64: Ausgangsseite
- 65: Ausgabeanschluss
- 66: Rotor
- 67: Konusabschnitt
- 68: Zylinderabschnitt
- 69: Innenfläche
- 70: Finger oder Lamelle
- 71: Finger oder Lamelle
- 72: Eingangsanschluss
- 73: Gehäuse
- 74: Motor
- 75: Misch- und/oder Förderwelle
- 76: Misch- und/oder Förderelement
- 77: Ausgabeanschluss
- 78: Temperieranschluss
- 79: Unterdruckanschluss
- 80: Spalthöhe
- 81: Heizeinrichtung
- 82: Steuereinrichtung
- 83: Nebenströmungskreislauf
- 84: Einzelwellen-Mischer
- 85: Doppelwellen-Mischer
- 86: Mischer
- 87: Unterdruckanschluss

## Patentansprüche

1. Milchcrumb-Herstellungseinrichtung (14) mit
a) einem Kocher (2), der einen SCM-Masse-Anschluss (18), eine Heizeinrichtung (81) und einen Rotor (19) aufweist, und
b) einem Kristallisator (5),
**dadurch gekennzeichnet, dass**
c) der Kocher (2) oberhalb des Kristallisators (5) angeordnet ist,
d) der Kocher (2) und der Kristallisator (5) über eine Übertrittsöffnung (4) miteinander verbunden sind und
e) die in dem Kocher (2) gekochte SCM (1) oder SCM (1) beinhaltende Masse zumindest teilweise durch die Schwerkraft von dem Kocher (2) durch die Übertrittsöffnung (4) zu dem Kristallisator (5) gefördert wird.

2. Milchcrumb-Herstellungseinrichtung (14) nach Anspruch 1, **wobei** eine Steuereinrichtung (82) vorhanden ist, die mit Steuerlogik derart gestaltet und konfiguriert ist, dass die in dem Kocher (2) gekochte SCM (1) oder SCM (1) beinhaltende Masse mit einem Volumenstrom derart
a) durch eine Rotorübertrittsöffnung (51) zwischen einem Gehäuse (21) des Kochers (2) und dem Rotor (19) des Kochers (2) und/oder
b) durch die Übertrittsöffnung (4) zu dem Kristallisator (5)
gefördert wird, dass ein freier Übertrittsquerschnitt (57) verbleibt,
wobei vorzugsweise die Fläche des verbleibenden freien Übertrittsquerschnitts (57)
- mindestens 60% der Fläche des Querschnitts der Rotorübertrittsöffnung (51) ist und/oder
- mindestens 60% der Fläche des Querschnitts der Übertrittsöffnung (4) ist

3. Milchcrumb-Herstellungseinrichtung (14) nach Anspruch 1, **wobei** ein Nebenströmungskreislauf (83) vorhanden ist, der vorzugsweise die Förderung der SCM (1) oder Masse
a) durch den Kocher (2) und/oder
b) durch die Übertrittsöffnung (4) und/oder
c) durch den Kristallisator (5)
unterstützt.

4. Milchcrumb-Herstellungseinrichtung (14) nach einem der vorhergehenden Ansprüche, **wobei** die Übertrittsöffnung (4) eine Querschnittsfläche von mindestens 8000 mm² aufweist.

5. Milchcrumb-Herstellungseinrichtung (14) nach einem der vorhergehenden Ansprüche, **wobei** der Kocher (2)
a) als konischer Kocher (2) ausgebildet ist und/oder
b) einen
ba) Rotor (19) mit kreisförmigem Querschnitt eines Rotorkerns (48) und sich von dem Rotorkern (48) radial nach außen erstreckenden Flügeln, Wischern, Rippen oder Schabern (49) aufweist oder
bb) einen Rotor (19) einen Sternkörper (54) mit sternförmigem Querschnitt aufweist.

6. Milchcrumb-Herstellungseinrichtung (14) nach einem der vorhergehenden Ansprüche, **wobei** eine Druckschleuse (11) vorhanden ist.

7. Milchcrumb-Herstellungseinrichtung (14) nach einem der vorhergehenden Ansprüche, **wobei** der Kristallisator (5) und/oder ein Trockner (6) einen Einzelwellen-Mischer (84) oder Doppelwellen-Mischer (85), vorzugsweise mit einer horizontalen Wellenachse, aufweist.

8. Milchcrumb-Herstellungseinrichtung (14) nach einem der vorhergehenden Ansprüche, **wobei** dem Kristallisator (5) ein Trockner (6) nachgeordnet ist, wobei vorzugsweise zwischen dem Kristallisator (5) und dem Trockner (6) eine Druckschleuse (11) angeordnet ist.

9. Milchcrumb-Herstellungseinrichtung (14) nach einem der vorhergehenden Ansprüche, **wobei** ausgangsseitig des Trockners (6) eine Druckschleuse (11) angeordnet ist.

10. Milchcrumb-Herstellungseinrichtung (14) nach einem der vorhergehenden Ansprüche, **wobei** stromaufwärts der Übertrittsöffnung (4) ein Lagerkörper angeordnet ist, an dem der untere Endbereich des Rotors (19) gelagert ist, wobei der Lagerkörper Durchtrittsöffnungen für die SCM (1) oder Masse aufweist.

11. Milchcrumb-Herstellungseinrichtung (14) nach einem der vorhergehenden Ansprüche, **wobei** eine Zellradschleuse (59) vorhanden ist, wobei die Zellradschleuse (59) vorzugsweise zwischen dem Kristallisator (5) und einem oder dem Trockner (6) angeordnet ist und/oder am Ausgang des Trockners (6) angeordnet ist.

12. Milchcrumb-Herstellungseinrichtung (14) nach einem der vorhergehenden Ansprüche, **wobei** im Ausgangsbereich des Kochers (2) ein Schauglas, ein Sensor (42) zur Erfassung einer Temperatur und/oder ein Sensor (42) zur Erfassung eines Drucks angeordnet sind/ist.

13. Milchcrumb-Herstellungseinrichtung (14) nach einem der vorhergehenden Ansprüche, **wobei** eine Steuereinrichtung (82) vorhanden ist, die mit Steuerlogik derart gestaltet und konfiguriert ist, dass eine Prozesssteuerung derart gewährleistet ist, dass
a) bei Eintritt in den Kocher (2) die Konzentration der SCM (1) oder Masse im Bereich von 65% TS bis 75% TS, vorzugsweise 71% TS bis 73% TS, liegt und die SCM (1) oder Masse eine Temperatur im Bereich von 30°C bis 80°C, vorzugsweise 40°C bis 70°C, aufweist,
b) bei Austritt aus dem Kocher (2)
ba) bei einem Kochen unter einem Druck, der kleiner ist als 950 mbar, die Konzentration der SCM (1) oder Masse im Bereich von 89% TS bis 92 % TS liegt und die SCM (1) oder Masse eine Temperatur im Bereich von 80°C bis 115 °C aufweist oder
bb) bei einem Kochen unter einem Druck, der mindestens 950 mbar beträgt, die Konzentration der SCM (1) oder Masse im Bereich von 89% TS bis 93 % TS liegt und die SCM (1) oder Masse eine Temperatur im Bereich von 115°C bis 125°C aufweist, und
c) in dem Kristallisator (5) die Konzentration der SCM (1) oder Masse (35) im Bereich von 92% TS bis 98% TS liegt und die SCM (1) oder Masse (35) eine Temperatur von 65°C bis 85°C, vorzugsweise 70°C bis 80°C, hat, wobei der Druck im Bereich von 150 mbar bis 350 mbar liegt,
wobei vorzugsweise in dem Trockner (6)
- die Konzentration der Masse (35) im Bereich von 96,5% TS bis 99,5% TS liegt,
- die Masse (35) eine Temperatur von 65°C bis 85°C hat und
- der Druck im Bereich von 150 mbar bis 350 mbar liegt.

14. Milchcrumb-Herstellungseinrichtung (14) nach einem der vorhergehenden Ansprüche, **wobei** eine Steuereinrichtung (82) vorhanden ist, die mit Steuerlogik derart gestaltet und konfiguriert ist, dass eine Prozesssteuerung derart gewährleistet ist, dass eine Masse hergestellt wird aus 84% SCM (1) bis 94% SCM (1) und 6% Kakaolikör (12) bis 16% Kakaolikör (12), wobei der Kakaolikör (12) vorzugsweise aus 45% Kakaobutter bis 55% Kakaobutter und 55% Kakaofeststoff bis 45% Kakaofeststoff zusammengesetzt ist, wobei insbesondere der Kakaolikör (12) als Flüssigkeit mit einer Temperatur im Bereich von 40°C bis 50°C zugeführt wird.

15. Verfahren zur Herstellung von Milchcrumb (7) mittels einer Milchcrumb-Herstellungseinrichtung (14), die insbesondere nach einem der vorhergehenden Ansprüche ausgebildet ist, mit folgenden Verfahrensschritten
a) Zuführen einer SCM (1) oder einer SCM (1) beinhaltenden Masse über einen SCM-Masse-Anschluss (18) zu einem Kocher (2),
b) Kochen der SCM (1) oder der SCM (1) beinhaltenden Masse in dem Kocher (2) mittels einer Heizeinrichtung (81) unter Bewegung der SCM (1) oder der SCM (1) beinhaltenden Masse durch einen Rotor (19) aufweist,
c) Fördern der gekochten SCM (1) oder der gekochten SCM (1) beinhaltenden Masse nach unten zumindest teilweise durch die Schwerkraft durch eine Übertrittsöffnung (4) zu einem unterhalb des Kochers (2) angeordneten Kristallisator (5) und
d) Herbeiführen einer Kristallisation in dem Kristallisator (5).

## Geänderte Patentansprüche

### Geänderte Patentansprüche gemäss Regel 137(2) EPÜ.

1. Milchcrumb-Herstellungseinrichtung (14) mit
a) einem Kocher (2), der einen SCM-Masse-Anschluss (18), eine Heizeinrichtung (81) und einen Rotor (19) aufweist, und
b) einem Kristallisator (5),
**dadurch gekennzeichnet, dass**
c) der Kocher (2) oberhalb des Kristallisators (5) angeordnet ist,
d) der Kocher (2) und der Kristallisator (5) ohne ein Masseleitungsrohr über eine Übertrittsöffnung (4) miteinander verbunden sind und
e) die in dem Kocher (2) gekochte SCM (1) oder SCM (1) beinhaltende Masse zumindest teilweise durch die Schwerkraft von dem Kocher (2) durch die Übertrittsöffnung (4) zu dem Kristallisator (5) gefördert wird.

2. Milchcrumb-Herstellungseinrichtung (14) nach Anspruch 1, **wobei** eine Steuereinrichtung (82) vorhanden ist, die mit Steuerlogik derart gestaltet und konfiguriert ist, dass die in dem Kocher (2) gekochte SCM (1) oder SCM (1) beinhaltende Masse mit einem Volumenstrom derart a) durch eine Rotorübertrittsöffnung (51) zwischen einem Gehäuse (21) des Kochers (2) und dem Rotor (19) des Kochers (2) und/oder
b) durch die Übertrittsöffnung (4) zu dem Kristallisator (5)
gefördert wird, dass ein freier Übertrittsquerschnitt (57) verbleibt,
wobei vorzugsweise die Fläche des verbleibenden freien Übertrittsquerschnitts (57)
- mindestens 60% der Fläche des Querschnitts der Rotorübertrittsöffnung (51) ist und/oder
- mindestens 60% der Fläche des Querschnitts der Übertrittsöffnung (4) ist

3. Milchcrumb-Herstellungseinrichtung (14) nach Anspruch 1, **wobei** ein Nebenströmungskreislauf (83) vorhanden ist, der vorzugsweise die Förderung der SCM (1) oder Masse
a) durch den Kocher (2) und/oder
b) durch die Übertrittsöffnung (4) und/oder
c) durch den Kristallisator (5)
unterstützt.

4. Milchcrumb-Herstellungseinrichtung (14) nach einem der vorhergehenden Ansprüche, **wobei** die Übertrittsöffnung (4) eine Querschnittsfläche von mindestens 8000 mm² aufweist.

5. Milchcrumb-Herstellungseinrichtung (14) nach einem der vorhergehenden Ansprüche, **wobei** der Kocher (2)
a) als konischer Kocher (2) ausgebildet ist und/oder
b) einen
ba) Rotor (19) mit kreisförmigem Querschnitt eines Rotorkerns (48) und sich von dem Rotorkern (48) radial nach außen erstreckenden Flügeln, Wischern, Rippen oder Schabern (49) aufweist oder
bb) einen Rotor (19) mit einem Sternkörper (54) mit sternförmigem Querschnitt aufweist.

6. Milchcrumb-Herstellungseinrichtung (14) nach einem der vorhergehenden Ansprüche, **wobei** eine Druckschleuse (11) vorhanden ist.

7. Milchcrumb-Herstellungseinrichtung (14) nach einem der vorhergehenden Ansprüche, **wobei** der Kristallisator (5) und/oder ein Trockner (6) einen Einzelwellen-Mischer (84) oder Doppelwellen-Mischer (85), vorzugsweise mit einer horizontalen Wellenachse, aufweist.

8. Milchcrumb-Herstellungseinrichtung (14) nach einem der vorhergehenden Ansprüche, **wobei** dem Kristallisator (5) ein Trockner (6) nachgeordnet ist, wobei vorzugsweise zwischen dem Kristallisator (5) und dem Trockner (6) eine Druckschleuse (11) angeordnet ist.

9. Milchcrumb-Herstellungseinrichtung (14) nach Anspruch 7 oder 8, **wobei** ausgangsseitig des Trockners (6) eine Druckschleuse (11) angeordnet ist.

10. Milchcrumb-Herstellungseinrichtung (14) nach einem der vorhergehenden Ansprüche, **wobei** stromaufwärts der Übertrittsöffnung (4) ein Lagerkörper angeordnet ist, an dem der untere Endbereich des Rotors (19) gelagert ist, wobei der Lagerkörper Durchtrittsöffnungen für die SCM (1) oder Masse aufweist.

11. Milchcrumb-Herstellungseinrichtung (14) nach einem der vorhergehenden Ansprüche, **wobei** eine Zellradschleuse (59) vorhanden ist, wobei die Zellradschleuse (59) vorzugsweise zwischen dem Kristallisator (5) und einem oder dem Trockner (6) angeordnet ist und/oder am Ausgang des Trockners (6) angeordnet ist.

12. Milchcrumb-Herstellungseinrichtung (14) nach einem der vorhergehenden Ansprüche, **wobei** im Ausgangsbereich des Kochers (2) ein Schauglas, ein Sensor (42) zur Erfassung einer Temperatur und/oder ein Sensor (42) zur Erfassung eines Drucks angeordnet sind/ist.

13. Milchcrumb-Herstellungseinrichtung (14) nach einem der vorhergehenden Ansprüche, **wobei** eine Steuereinrichtung (82) vorhanden ist, die mit Steuerlogik derart gestaltet und konfiguriert ist, dass eine Prozesssteuerung derart gewährleistet ist, dass
a) bei Eintritt in den Kocher (2) die Konzentration der SCM (1) oder Masse im Bereich von 65% TS bis 75% TS, vorzugsweise 71% TS bis 73% TS, liegt und die SCM (1) oder Masse eine Temperatur im Bereich von 30°C bis 80°C, vorzugsweise 40°C bis 70°C, aufweist,
b) bei Austritt aus dem Kocher (2)
ba) bei einem Kochen unter einem Druck, der kleiner ist als 950 mbar, die Konzentration der SCM (1) oder Masse im Bereich von 89% TS bis 92 % TS liegt und die SCM (1) oder Masse eine Temperatur im Bereich von 80°C bis 115 °C aufweist oder
bb) bei einem Kochen unter einem Druck, der mindestens 950 mbar beträgt, die Konzentration der SCM (1) oder Masse im Bereich von 89% TS bis 93 % TS liegt und die SCM (1) oder Masse eine Temperatur im Bereich von 115°C bis 125°C aufweist, und
c) in dem Kristallisator (5) die Konzentration der SCM (1) oder Masse (35) im Bereich von 92% TS bis 98% TS liegt und die SCM (1) oder Masse (35) eine Temperatur von 65°C bis 85°C, vorzugsweise 70°C bis 80°C, hat, wobei der Druck im Bereich von 150 mbar bis 350 mbar liegt,
wobei vorzugsweise in dem Trockner (6)
- die Konzentration der Masse (35) im Bereich von 96,5% TS bis 99,5% TS liegt,
- die Masse (35) eine Temperatur von 65°C bis 85°C hat und
- der Druck im Bereich von 150 mbar bis 350 mbar liegt.

14. Milchcrumb-Herstellungseinrichtung (14) nach einem der vorhergehenden Ansprüche, **wobei** eine Steuereinrichtung (82) vorhanden ist, die mit Steuerlogik derart gestaltet und konfiguriert ist, dass eine Prozesssteuerung derart gewährleistet ist, dass eine Masse hergestellt wird aus 84% SCM (1) bis 94% SCM (1) und 6% Kakaolikör (12) bis 16% Kakaolikör (12), wobei der Kakaolikör (12) vorzugsweise aus 45% Kakaobutter bis 55% Kakaobutter und 55% Kakaofeststoff bis 45% Kakaofeststoff zusammengesetzt ist, wobei insbesondere der Kakaolikör (12) als Flüssigkeit mit einer Temperatur im Bereich von 40°C bis 50°C zugeführt wird.

15. Verfahren zur Herstellung von Milchcrumb (7) mittels einer Milchcrumb-Herstellungseinrichtung (14), die insbesondere nach einem der vorhergehenden Ansprüche ausgebildet ist, mit folgenden Verfahrensschritten
a) Zuführen einer SCM (1) oder einer SCM (1) beinhaltenden Masse über einen SCM-Masse-Anschluss (18) zu einem Kocher (2),
b) Kochen der SCM (1) oder der SCM (1) beinhaltenden Masse in dem Kocher (2) mittels einer Heizeinrichtung (81) unter Bewegung der SCM (1) oder der SCM (1) beinhaltenden Masse durch einen Rotor (19) aufweist,
c) Fördern der gekochten SCM (1) oder der gekochten SCM (1) beinhaltenden Masse nach unten zumindest teilweise durch die Schwerkraft durch eine Übertrittsöffnung (4) ohne Förderung durch ein Masseleitungsrohr zu einem unterhalb des Kochers (2) angeordneten Kristallisator (5) und
d) Herbeiführen einer Kristallisation in dem Kristallisator (5).
